(19) Europäisches Patentamt / European Patent Office / Office européen des brevets

(11) **EP 2 877 884 B1**

(12) **EUROPEAN PATENT SPECIFICATION**

(45) Date of publication and mention
of the grant of the patent:
**27.11.2024 Bulletin 2024/48**

(21) Application number: **13739739.4**

(22) Date of filing: **24.07.2013**

(51) International Patent Classification (IPC):
**G02B 6/34** *(2006.01)* **F21V 8/00** *(2006.01)*

(52) Cooperative Patent Classification (CPC):
**G02B 6/34;** G02B 6/2793; G02B 6/29323;
G02B 6/29329; G02B 6/29397

(86) International application number:
**PCT/EP2013/065631**

(87) International publication number:
**WO 2014/016343 (30.01.2014 Gazette 2014/05)**

(54) **METHOD TO OPTIMIZE A LIGHT COUPLING WAVEGUIDE**

VERFAHREN ZUR OPTIMIERUNG EINES OPTISCHEN EINKOPPELWELLENLEITERS

PROCÉDÉ POUR OPTIMISER UN GUIDE D'ONDE DE COUPLAGE DE LUMIÈRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.07.2012 PCT/EP2012/064634**

(43) Date of publication of application:
**03.06.2015 Bulletin 2015/23**

(73) Proprietor: **CSEM Centre Suisse d'Electronique et
de
Microtechnique SA - Recherche et
Développement
2002 Neuchâtel (CH)**

(72) Inventors:
• **SQALLI, Omar**
**81677 München (DE)**
• **PIRES, David**
**CH-4123 Allschwil (CH)**
• **BASSET, Guillaume**
**F-68330 Huningue (FR)**
• **STALDER, Martin**
**CH-4104 Oberwil (CH)**

(74) Representative: **Bovard SA Neuchâtel
Rue des Beaux-Arts 8
2000 Neuchâtel (CH)**

(56) References cited:
**EP-A1- 0 982 071 WO-A1-2005/103771**

FR-A1- 2 942 549 JP-B2- 3 100 499
US-A1- 2005 002 611 US-A1- 2010 277 803
US-A1- 2010 322 555

• **TAPANI LEVOLA ET AL: "Replicated slanted
gratings with a high refractive index material for
in and outcoupling of light", OPTICS EXPRESS,
OSA PUBLISHING, US, vol. 15, no. 5, 5 March 2007
(2007-03-05), pages 2067 - 2074, XP002624810,
ISSN: 1094-4087, DOI: 10.1364/OE.15.002067**

• **MILLER J M ET AL: "DESIGN AND FABRICATION
OF BINARY SLANTED SURFACE-RELIEF
GRATINGS FOR A PLANAR OPTICAL
INTERCONNECTION", APPLIED OPTICS,
OPTICAL SOCIETY OF AMERICA,
WASHINGTON, DC, US, vol. 36, no. 23, 10 August
1997 (1997-08-10), pages 5717 - 5727,
XP000699467, ISSN: 0003-6935, DOI:
10.1364/AO.36.005717**

• **JANYCE FRANC ET AL: "High-efficiency
diffraction grating coupler for multimode optical
interconnect", PROCEEDINGS OF SPIE, vol.
6185, 21 April 2006 (2006-04-21), US, pages
61851F-1, XP040223274, ISBN:
978-1-5106-1533-5, DOI: 10.1117/12.666710**

• **ROELKENS G; VAN THOURHOUT D; BAETS R:
"High efficiency silicon-on-insulator grating
coupler based on a poly-silicon overlay", OPTICS
EXPRESS, vol. 14, no. 24, December 2006
(2006-12-01), USA, pages 11622 - 11630,
XP002696024**

- **ALONSO-RAMOS C; ORTEGA-MOÑUX A; HALIR R; ZAVARGO-PECHE L; MOLINA-FERNANDEZ I; CHEBEN P; XU D -X; JANZ S: "Grating couplers in thick rib SOI waveguides for TE and TM polarizations", SILICON PHOTONICS AND PHOTONIC INTEGRATED CIRCUITS III -PROCEEDINGS OF THE SPIE - THE INTERNATIONAL SOCIETY FOR OPTICAL ENGINEERING, vol. 8431, 19 April 2012 (2012-04-19), Belgium, pages 84310E-1 - 84310E-7, XP002696025**
- **MAIRE G ET. AL.: "High efficiency silicon nitride surface grating couplers", OPTICS EXPRESS, vol. 16, no. 1, 4 January 2008 (2008-01-04), USA, pages 328 - 333, XP002696026**

## Description

### Technical field

The present invention concerns a method to devise a multimodal waveguide comprising a periodic diffractive grating. The method aims to optimize the coupling efficiency of an incident light beam coupled into such a waveguide. The invention also concerns the device obtained by the disclosed method.

### State of the art

Most of the existing solutions for guiding light have been focused so far on single mode waveguides. Indeed, such a waveguide makes the light transmission easier as only the mode of order zero is transmitted into the waveguide in a straight path. The coupling efficiency corresponds to the efficiency of optical power transfer between two optical components. For example, the transfer may take place between an active component, such as a Light Emitting Diode (LED), and a passive component, such as an optical fiber, or between two passive components such as two optical fibers. Coupling efficiency is usually expressed as the ratio, converted to percent, of the input power, i.e., the available power from one component, to the power transferred to the other component. In order to save power, and increase battery life of portable devices, the coupling efficiency is the key factor that must be kept as high as possible. It is generally assumed that grating coupling to multimode waveguides has an inherently poor efficiency as remarked by Destouches et. al. "Efficient and tolerant resonant grating coupler for multimode optical interconnections" in Optics Express vol. 15, nr. 25, pp 16870-16879, 2007. Even in publications which achieve high coupling efficiency for reflective gratings, Janyce Franc et. al. state that "It is usually believed that grating coupling to a multimode waveguide has extremely low efficiency. This is the case indeed unless a mirrored grating slab is installed at the multimode waveguide side opposite to the incident beam input side." in "High efficiency diffraction grating coupler for multimode optical interconnect" by Janyce Franc et. al. in Micro-Optics, VCSELs, and Photonic Interconnects II: Fabrication, Packaging, and Integration, edited by H. Thienpont, M. R. Taghizadeh, P. Van Daele, J. Mohr, Proc. of SPIE Vol. 6185.

Only a few alternative solutions describing a multimodal waveguide for coupling light have been investigated as the materials that are used are expensive and as their manipulation is complex. Such waveguides comprise a coupling grating in order to input the light into or output the light out of the waveguide. An input beam of light impinging on such an input grating may be coupled into the waveguide such that it propagates within the waveguide and is subsequently coupled out by an output grating providing an output beam of light. Light may be confined in the internal layer of the waveguide by total internal reflection when the dielectric index of the internal layer is larger than that of the surrounding layers.

For example, patent application US2010/0277803 describes a multimodal waveguide comprising an input coupling grating and an output coupling grating. The input and output gratings are diffractive elements, which have a grating period P which is e.g. in the range of w/2 to w where w is a visible wavelength of light. To obtain high transmission efficiency, the input grating must be a slanted grating, which contains surfaces whose slope is steeper than vertical-assuming the grating average surface is horizontal. This results in a structure that is difficult and expensive to mass-produce; standard surface embossing cannot produce it. In addition, the device is adapted to couple light from a small display, which emits polarized light.

The publication TAPANI LEVOLA ET AL: Replicated slanted gratings with a high refractive index material tor in and outcoupling of light', OPTICS EXPRESS, OSA PUBLISHING, US, vol. 15, no. 5, 5 March 2007 (2007-03-05), pages 2067-2074, describes the incoupling of light into multimode waveguides by incouplers based on slanted gratings. The use of such slanted gratings presents problems related to great technological difficulties making them difficult to reproduce precisely and to obtain a well-controlled incoupling efficiency. Realizing slanted gratings implies also a huge cost of their fabrication process.

Recent developments have shown that the enhancement of the diffraction efficiency of gratings can be obtained by combining gratings with a thin waveguide, having a width of typically one to two wavelengths of the incoupled light. The enhancement of the diffraction efficiency with these techniques is obtained by creating resonance effects for a leaky mode in the waveguide, which is achieved by using destructive interference effects between the incoupled light by the grating in the waveguide and an outcoupled part of the reflected beam guided inside that waveguide. The principle of this diffraction efficiency enhancement by using these resonance effects is discussed in detail in the documents US 6219478 and WO2005103771. By the fundamental nature of the interference effects of the incoupled and partially outcoupled light the thickness of the waveguide used to enhance the diffraction effect is very small, and has to be smaller than the temporal coherence which is typically 1$\mu$m for sunlight and 1.5 $\mu$m for a typical white light bulb. The devices disclosed in these documents are not suitable for applications requiring bulk waveguides with thicknesses typically thicker than 10 $\mu m$, such as are needed in the case of image transmission where thicknesses of a fraction of a mm are required. Waveguide thicknesses of more than typically 1$\mu$m would need very specific light sources such as lasers having high temporal coherence. Also, the devices described in US 6219478 and WO2005103771 are substantially gratings covering completely the thin waveguides, and in consequence do not allow coupling and decoupling of an image or of a light spot larger than a few microns, because the first reflection of the incoupled light in the waveguide will be directed onto the incoupling grating.

Similar developments to enhance the efficiency of incoupled light in a multimode waveguide have been made in the field of high density photonic integrated circuits such as reported by L.Zhu et al. in the publication "Novel High Efficiency Vertical to In-plane Optical Coupler", Proc. of SPIE, Vol.8270, 82700L-1, 2012. Here again, these developments have shown that the waveguide thicknesses to obtain high efficiency coupling of light by a grating are limited to typically $1\mu m$.

An attempt to realize a device to incouple and outcouple an image or light spot larger than a few microns, without using a resonance effect by the waveguide is described in the document US2005/002611, which describes a multimodal waveguide comprising an input coupling grating with a sinusoidal shape. The input grating can couple polarized light with an efficiency below 40%, and requires the use of a polarization rotator to ensure that the light gets coupled into the waveguide, and does not exit at the first reflection.

**Summary of the invention**

It is therefore an object of the present invention to couple light into a multimode waveguide, e.g., a bulk transparent material, with a very high efficiency, while imposing some constraints on the waveguide shape to be compatible with mass production manufacturing techniques. The applicant has identified that efficient coupling of the incident beam into the multimode waveguide is achieved if the wavefront of the coupled light in the waveguide is able to propagate along a specific diffraction order, different than the zero order. In the present invention the multimode waveguide consists of a transparent optical foil or sheet, such as a glass plate, a polymer foil or the like, which at one side or both sides of the surface has an optical coupling structure which couples an incident light beam into the waveguide. The coupling structure is periodic and therefore produces diffraction of the incident light beam. Efficient coupling into the waveguide is achieved if only the first and/or the minus first diffraction order is coupled into the waveguide. Alternatively also the second and minus second order diffraction order can be used for efficient coupling. Usually the coupled diffraction order is at least 10 times more intense than any of the other remaining orders in the waveguide. We have shown that under suitable conditions light can be coupled with very high efficiencies of 80% or more into multimode waveguides even if the waveguide is typically thicker than 10 $\mu m$, and a thickness of typically a millimeter is possible. To the contrary of what is disclosed in the prior art, the coupling principle of the present invention is not based on a resonance effect. Therefore the grating used to incouple light in the waveguide has a length D such that the first reflected light beam inside the waveguide is incident outside the area of the incoupling grating. Therefore, the length D of the incoupling grating, measured on one of the top surfaces of the multimode waveguide in the direction of the diffracted beam is related to the thickness WT of the waveguide and to the angle $\beta$ between the waveguide surface normal and the light beam inside said multimode waveguide, by the following inequality:

$$D \le 2 \cdot WT \cdot \tan\beta$$

This inequality shows that, contrary to the prior art mentioned above, no interference is realized between the incident light coupled into the grating and any partially refracted light beam produced by a light beam inside the waveguide. As no interference is required, the grating thickness can be much larger that the temporal coherence length of the incidence light without lowering the coupling efficiency. The coupling efficiency is of uttermost importance since it is directly linked to the power consumption of the device that integrates the waveguide; a high efficiency reduces the required optical input power and hence the overall power consumption. Because only one diffraction order is able to propagate in the waveguide, the wavefront of the light is very efficiently diffracted and not transmitted without diffraction in the transparent medium. This makes it possible to transport coherent laser beams in the waveguide and/or to transmit entire images or light spots larger than a few microns, efficiently. It also makes it possible to collect light from different parts of the waveguide and concentrate it at one or several regions of the waveguide. Alternatively, the light can also be distributed in a predetermined manner by the waveguide.

To this aim, this invention describes a method to obtain the physical characteristics of a grating to be applied on a multimode waveguide. The relationship between the structural parameters and the optical response, i.e. the coupling efficiency into the waveguide, has no mathematical closed form. The relationship is well known in the field of optics and telecommunication, and can be computed using commercial optical software packages, for example, GSolver from Grating Solver Development company. The background equations used by those packages can be found in the scientific publication by M. G. Moharam and T. K.Gaylord "Diffraction analysis of dielectric surface-relief gratings", Journal of optical society of America, Vol 72, No 10, October 1982, pp. 1292-1385. The computation of the optical response can be considered as a black box for the scope of this invention. Every structural parameter of the input grating has an influence on the light transmission into the waveguide. To transmit an image into the waveguide, one diffraction order has to dominate compared to the other diffraction orders. For example, the diffraction order 1 can be optimized such that its power exceeds by a factor greater than 10 the other (positive) diffractive orders. If more than one order is transmitted, the wave front gets altered, and the transmitted images loses in quality. The diffractive orders with different signs, for instance order +1 and -1 do not interfere, since they get coupled in the waveguide into opposite directions.

Thus, the invention concerns a method for constructing a light coupling system according to claim 1 and the device obtainable by such a method according to claim 4.

**Brief description of the drawings**

Figure 1 is a transversal partial view of a waveguide according to an embodiment of the present invention;

Figure 2 is a transversal partial view of a waveguide to illustrate the different shapes engraved on the waveguide;

Figure 3 illustrates a partial perspective view of an embodiment of a waveguide with rectangular shapes according to the present invention;

Figure 4 illustrates a partial perspective view of an embodiment of a waveguide with blazed shapes not being part of the claimed invention;

Figure 5 illustrates a partial perspective view of an embodiment of a waveguide with a staircase shape according to the present invention;

Figure 6 schematically illustrates incident light incoming on a periodic diffractive grating of a waveguide according to the present invention;

Figure 7 to 8 schematically illustrates incident light incoming on a periodic diffractive grating of a waveguide according to the present invention and the influence of the waveguide thickness on the transmission of the light;

Figure 9 shows the internal angle of the diffractive order 1 coupled light beam as a function of the wavelength for different grating periods P ;

Figure 10 compares the coupling efficiency Ce of normal incident light on a multimode waveguide for different periods P of the grating with and without the enhancement layer;

Figure 11 illustrates the coupling efficiency Ce of an incident light impinging on the grating with an angle $\Theta$, for the diffraction order 1 (T1) and diffraction order -1 (T-1), for a waveguide with an enhancement layer;

Figure 12 shows the coupling efficiency Ce for different incident angles ($\theta$) for a waveguide with an enhancement layer;

Figure 13 combines the results of Figure 12, and shows the influence of the incident light angle variance on the transmission efficiency;

Figure 14 show the influence of the grating period P on the coupling efficiency as a function of wavelength w for a normal incident light;

Figure 15 show the influence of the grating period P on the coupling efficiency as a function of the wavelength w ;

Figure 16 shows an application of a waveguide to transmit an image from an input location to an output location;

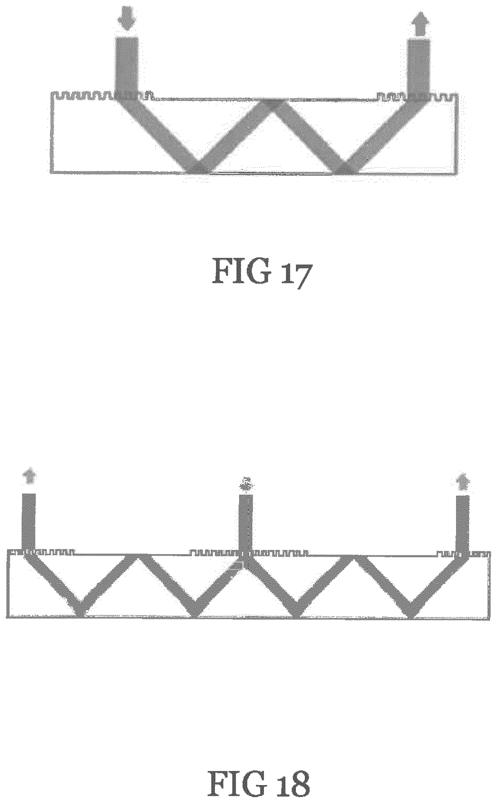

Figure 17 shows an application of a waveguide to transmit a laser beam coherently from an input location to an output location. After exiting the waveguide at the output location the laser beam is still collimated and shows speckle;

Figure 18 shows a light concentrator with a waveguide. Light is coupled into the waveguide from several sides and concentrates in the center of the drawing;

Figure 19 shows the coupling efficiency Ce of a grating and waveguide during the optimization of the second set of parameters of the grating;

Figure 20 shows the evolution of the difference between the target efficiency and the computed efficiency as a function of the iteration step;

Figure 21 shows the coupling efficiency of a grating according to claim 1 optimized for a TE polarized incident light beam;

Figure 22 shows the coupling efficiency of a grating according to claim 1 optimized for a TM polarized incident light beam;

Figure 23 shows the coupling efficiency for TE and TM polarized light of a grating according to claim 1 optimized for an unpolarized (TE&TM) incident light beam;

Figure 24 shows an illustration of a ZnS grating structure realized on the surface of a multimode or bulk waveguide or a transparent layer optimized for unpolarized light;

Figure 25 shows the coupling efficiency of a ZnS grating optimized for a blue and unpolarized (TE and TM polarization) incident light beam having an incidence angle of 14°;

Figure 26 shows the coupling efficiency of a ZnS grating optimized for a green and unpolarized (TE and TM polarization) incident light beam having an incidence angle of 14°;

Figure 27 shows the coupling efficiency of a ZnS grating optimized for a red and unpolarized (TE and TM polarization) incident light beam having an incidence angle of 14°;

Figure 28 shows the coupling efficiency of a ZnS grating optimized for a blue-green-red and unpolarized (TE and TM polarization) incident light beam having an incidence angle of 14°;

Figure 29 shows the coupling efficiency of a sinusoidal grating optimized for a blue-green-red and unpolarized (TE and TM polarization) incident light beam having an incidence angle of 14°.

**Detailed description of several embodiments**

Unless specified otherwise, every example disclosed in this document is using a waveguide in an ambient environment composed of air, i.e. with a refractive index n1 = 1. Also, unless specified otherwise, the incident light beam that hits the waveguide is polarized, with its polarization parallel to the structures of the grating, in other words, a TE polarized light.

The invention concerns a method for constructing a light coupling system wherein a grating comprising a repetition of patterns is manufactured on the surface of a multimode waveguide. Engraving, or hot embossing, or injection molding, or any other suitable method can be used to manufacture the grating. This method comprises a step of choosing a first set of parameters comprising:

- wavelength distribution of the incident light to be transmitted by the waveguide,
- polarized or unpolarized nature of said incident light,
- incident angle standard deviation $S\theta$ of the incident light with respect to the waveguide,
- shape of the pattern, which is designed to have its local surface normal Ns making an angle $\alpha$ with respect to the average normal N)of the surface of the multimode waveguide, said angle $\alpha$ being comprised between $\alpha=-90°$ and $\alpha=90°$ in any location of the shape surface,
- refractive index n1 of the medium surrounding the waveguide
- waveguide refractive index n3,

said method comprises a step of choosing of a second set of parameters comprising:

- grating period P, separating two adjacent patterns,

- grating depth d between the highest and the lowest point of the pattern,

- incident angle mean value $\theta$ of the incident light with respect to the waveguide.

In addition, the method comprises a step of optimization of the second set of parameters, to obtain a transmission efficiency Ce of the incident light into said waveguide for the positive first or the positive second diffractive order or the negative first or negative second diffractive order exceeding 35% at a given wavelength of the incident light for unpolarized incident light. For polarized incident light, said transmission efficiency Ce exceeds 50% at a given wavelength. The method comprises a step of manufacturing the grating on the surface of the multimode waveguide according to said optimized second set of parameters.

The coupling efficiency compares the input light power to the light power that managed to cross the grating. If we consider the whole system, namely the multimode waveguide and the grating, it can be convenient to optimize the system such as to inject the maximum amount of light into the section of the multimode waveguide 11 that exhibits repeated total internal reflections. To perform said optimization of the overall coupling efficiency, the length D of the grating measured on the waveguide surface along a direction defined by the light path is related to the waveguide thickness WT and to the angle $\beta$ between the waveguide surface normal and the coupled light beam inside the waveguide by the following inequality:

$$D \leq 2 \cdot WT \cdot \tan\beta$$

This inequality is fundamental to the present invention as it shows that, to the contrary of resonating waveguides taught in the prior art, no interference is realized between the incident light coupled into the grating and any outcoupled refracted light beam produced by a light beam inside the waveguide. In other words, the length D of the grating measured on the waveguide surface along a direction defined by said incident light is smaller than the distance 5 between the spot where the incident light is coupled into the grating, and the spot where the beam of light hits the waveguide top surface after the first internal reflection in the waveguide, provided the waveguide top surface is the surface on which the grating is manufactured. Advantageously, the waveguide thickness WT is larger or equal to 1 micron, and can be preferably larger or equal to 0.5 mm, which is essentially impossible to achieve in devices using resonance effects, i.e. Interference effects between partially reflected, coherent, light beams as explained in detail in for example US 6219478 and WO 2005103771 with common light sources having temporal coherence of a few microns.

The optimization of the waveguide geometry and especially the waveguide thickness is performed after the optimization according to claim 1, i.e. after the optimization of the second set of parameters mentioned above. Indeed the thickness of the waveguide is independent from the optimization of the coupling structure efficiency, according to claim 1 which is not possible when resonance conditions and coherence requirements have to be considered, as for example in US 6219478 and WO 2005103771.

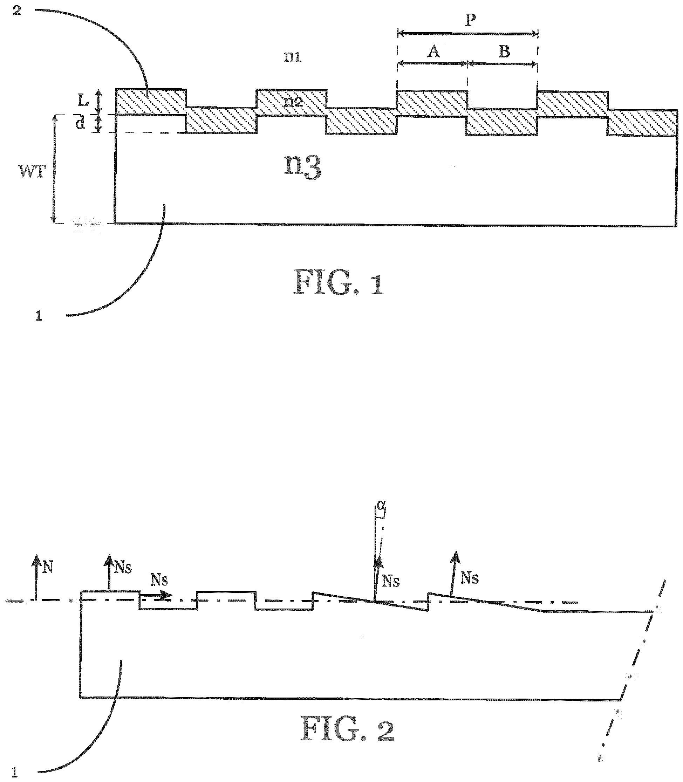

The shape of the pattern is rectangular; the optimization step then comprises the optimization of the rectangular fill factor A/P defined as the width of a rectangle compared to the grating period P, as shown in Figure 1. Alternatively, the shape of the pattern is a sinusoidal shape, a triangular shape, or a staircase shape. The staircase shape achieves coupling light with a wider spectrum than the other shapes. In order to get a better coupling efficiency,

- the grating is covered by an enhancement layer 2 whose refractive index n2 belongs to the first set of parameters, and whose thickness L belongs to the second set of parameters, and

- wherein the optimization step comprises the optimization of said layer thickness L, and

- wherein n2-n1 is greater or equal to 0.3, preferably greater or equal to 0.5 preferably greater or equal to 0.8, and

- wherein n2-n3 is greater or equal to 0.3, preferably greater or equal to 0.5 preferably greater or equal to 0.8.

In order to protect the waveguide from environmental factors, such as touch, humidity, chemistry and the like, the entire waveguide or parts of the waveguide including or not the coupling structure, can be covered by a material with lower index of refraction that the waveguide. The refractive index of the cover material should be at least 0.07 smaller, preferably, at smaller or equal by 0.15 than the refractive index of the multimode or bulk waveguide.

The optimization step can be designed to obtain a transmission efficiency of the incident light into said waveguide for the first or the second diffractive order exceeding 50% preferably exceeding 70% preferably exceeding 90% at a given wavelength of the incident light. As shown later, to get a coupling efficiency of nearly 100%, the incident angle mean value θ must be small but not zero. Its absolute value tends to be comprised between 2 and 12 degrees.

In practice, to obtain a desired coupling efficiency, the optimization step starts by

- defining a target efficiency given as an input distribution with respect to the wavelength of the incident light,

- followed by a computation step that computes the efficiency with respect to the wavelength of the incident light on the basis of the first and second sets of parameters,

- followed by a minimization step that minimizes the difference between the target efficiency and the computed efficiency by modifying each parameter of the second set of parameters.

The target efficiency being a function of the wavelength w can conveniently be represented by a vector of values. The difference between the target efficiency and the computed efficiency can be any usual error function, for example the squared error function, also known as L2 norm, or the absolute difference, also known as L1 norm, or any other function, as long as it reaches its minimum when the computed efficiency is equal to the target efficiency. To take into account the standard deviation of the incident angle, the computation step computes the efficiency based on several incident angles according to the incident angle distribution defined by the incident angle mean and the incident angle standard deviation, and averages the result accordingly in order to get an efficiency as a function of wavelength.

The computation step and the minimization step are iterated in alternation several times until the difference between the target efficiency and the computed efficiency does not vary significantly. For example, the iterations can be stopped when the difference does not vary by more than 0.1% between two consecutive iteration steps.

The optimization method described so far comprises a lot of parameters. In order to accelerate the convergence of the optimization step, and to make sure that the result is compatible with the production at a reasonable price, the parameters of the second set can be advantageously constrained during the minimization step.

- The grating depth d between the highest and the lowest point of the pattern can be constrained between 10nm and 1000nm, preferably between 20nm and 400nm.
- The waveguide thickness WT can be constrained to be larger or equal to 1 micron, preferably larger or equal to 0.5 mm

- For rectangular shaped gratings, the rectangular fill factor is constrained between 10% and 90%, preferably between 40% and 60.
- The thickness L of the enhancement layer 2 is constrained between 10nm and 500nm, preferably between 100nm and 200nm.
- For visible light with wavelength ranging from 400nm to 700nm, the grating period P, separating two adjacent patterns, can be constrained between 230nm and 840nm.
- For infrared light with wavelength ranging from 700nm to 2500nm, the grating period P, separating two adjacent patterns, can be constrained between 580nm and 3000nm.
- For ultraviolet light with wavelength ranging from 250nm to 400nm, the grating period P, separating two adjacent patterns, can be constrained between 180nm and 560nm.

An optimization method that converges quickly to a solution is the particle swarm optimization, commonly found for any optimization software. The method starts by choosing randomly one set of values, or several set of values, within the constrained boundaries for each parameter. The parameters are, of course, the ones belonging to the second set of parameters according to the present invention, since these are the only ones that get optimized by the optimization method.

The invention also concerns an optical system according to claim 4. The optimization method according to the present invention defines, once it has converged, the relationship between the structural parameters of the light coupling system that reaches said transmission efficiency Ce ; in particular the value of the grating period P , separating two adjacent patterns, and the value of the grating depth d between the highest and the lowest point of the pattern. The waveguide refractive index n3 is chosen beforehand, by choosing the material used to manufacture the waveguide. The grating shape is also chosen beforehand. Unfortunately, there is no closed form relationship that relate the structural parameters of the light coupling system to ensure a given coupling efficiency, thus the only way to characterize the light coupling system is by measuring its coupling efficiency.

In one claimed alternative, the shape of the grating pattern is rectangular with a fill factor A/P, defined as the width of a rectangle A compared to the grating period P, comprised between 10% and 90%, preferably between 40% and 60%. The fill factor is optimized together with the set of parameters. In this case, the optimization method according to the present invention defines, once it has converged, the value of the grating period P separating two adjacent patterns, the value of the fill factor of the rectangular grating A/P, and the value of the grating depth d of the rectangles.

The periodic diffractive grating is coated with a refractive enhancement layer 2. The refractive enhancement layer 2 has a refraction index n2, wherein n2-n1 is greater or equal to 0.3, preferably greater or equal to 0.5 preferably greater or equal to 0.8, and wherein n2-n3 is greater or equal to 0.3, preferably greater or equal to 0.5 preferably greater or equal to 0.8. The enhancement layer 2 thickness L is optimized as an additional parameter in the parameter set characterizing the light coupling system in order to obtain a transmission efficiency for the first or the second diffractive order exceeding 50% preferably exceeding 70% preferably exceeding 90% at a given wavelength of the incident light beam.

Such a grating allows high coupling efficiency, up to nearly 100%, depending on the nature and thickness of the refractive enhancement layer and by tuning e.g. the grating period, the grating depth, the refraction indexes of the waveguide, the grating and the refractive enhancement layer, the incidence angle of the input beam of light, the input light wavelength and the size of the input grating. In particular, such a waveguide, through its efficiency and by tuning the parameters, allows controlling intensity and colors when transmitting images.

The multimode waveguide may be made of a transparent material like glass, quartz or a polymer, preferably a transparent polymer like e.g. polycarbonate which is transparent, Polymethyl Methacrylate PMMA, which is cheap and melts quickly, or PET, or solgel, etc. A polymer material is advantageously flexible.

The refractive enhancement layer is made of a high refraction index material. The material is zinc sulfide ZnS or hafnium oxide HfO2 or titanium dioxide TiO2 or tantalum pentoxide Ta2O5 or Zirconium dioxyde ZrO2, or AlN, or Al2O3 or ZnO or any combination of these materials. Such materials are easy to use. For example, the coating may be performed directly on the grating with methods well known to the skilled person in the art.

Advantageously, the grating depth d between the highest and the lowest point of the pattern is comprised between 10nm and 1000nm, preferably between 20nm and 400nm.

The thickness L of the enhancement layer 2 is comprised between 10nm and 500nm, preferably between 100nm and 200nm.

Advantageously, for coupling light with a wavelength comprised between 400nm and 700nm, the grating period P, separating two adjacent patterns, is comprised between 230nm and 840nm.

Advantageously, for coupling light with a wavelength comprised between 700nm and 2500nm, the grating period P, separating two adjacent patterns, is comprised between 580nm and 3000nm.

Advantageously, for coupling light with a wavelength comprised between 250nm and 400nm, the grating period P, separating two adjacent patterns, is comprised between 180nm and 560nm. The refractive enhancement layer of refraction index n2 is located between the periodic diffractive grating of refraction index n3 and a medium of refraction index n1, such as e.g. air. In the case where the refraction index is a complex number, it is meant here the real value of the refraction index. To compute more precisely the coupling efficiency, the refraction index can be considered as a function of the wavelength, i.e. a real number for each considered wavelength, instead of an average value for each wavelength. This refraction index function is well known for each considered material.

Therefore, the material, and therefore the refraction index of the refractive enhancement layer may be selected in regard to the refraction index of the waveguide in order to optimize the coupling efficiency.

In an embodiment according to the invention, the multimodal waveguide is substantially parallelepiped and comprises a substrate comprising one input periodic diffractive grating for receiving an incoming beam of light and one output periodic diffractive grating for outputting the corresponding beam of light. The refraction index and/or the thickness of the refractive enhancement layer may then be chosen depending on the thickness and/or the refraction index of the waveguide so that the in-coupled light is propagated within the substrate by internal reflections and outputted or coupled out of the waveguide by the output periodic diffractive grating with less than 30% loss of efficiency of coupling. The different refraction indexes n1, n2, n3 may be selected so that the incident angle of the input beam in the substrate derive a path within the waveguide where the beam reaches, after internal reflections within the substrate, the output periodic diffractive grating. In a particular embodiment wherein said output periodic diffractive grating has the same structural characteristics as the input periodic diffractive grating, and if the incoupled light beam is monochromatic and has substantially no angular divergence, the wavefront of the outcoupled light beam will be substantially identical as the wavefront of the incoupled light beam in the waveguide so that an image can be in-coupled in the waveguide, transmitted by internal reflection in said waveguide, and outcoupled by said output periodic diffraction grating without substantial distortion.

The invention also concerns a system comprising a multimodal waveguide as defined here above and a light input component configured for providing a beam of light to the grating of the multimodal waveguide.

Several embodiments of a grating obtained by a method according to this invention are described in relation to the figures that illustrate them, or illustrate their properties.

Figure 1 is a transversal partial view of a waveguide according to a device obtained by the method according to claim 1, i.e. by the method described above for a light coupling system with a rectangular pattern and with an enhancement layer. The waveguide 1 is coated with an enhancement layer 2 of thickness L. The grating comprises rectangular repetitive shapes of depth d, of period P and whose fill factor is equal to A/P; A being the width of the protuberant rectangle.

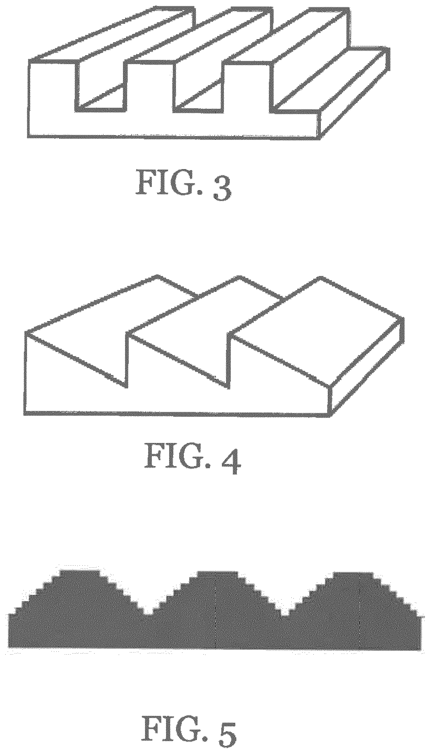

Figure 2 is a transversal partial view of a waveguide engraved with two different gratings to illustrate the angle α of the local surface Normal Ns with respect to the average normal N of the surface of the multimode waveguide. The condition on the surface orientation is dictated by production requirements. If the absolute value of angle α does not exceed 90°, the grating can be produced using a standard embossing procedure, allowing for inexpensive mass production of the waveguide according to the present invention. The pattern is a sinusoidal pattern, a squared pattern, or a triangular pattern, some of which are shown as examples in Figures 3 and 5.

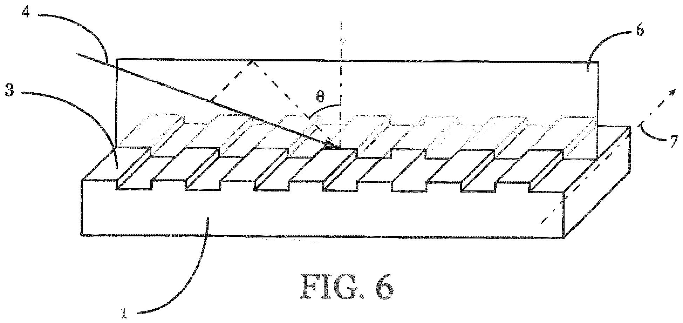

Figure 6 schematically illustrates incident light 4 incoming on a periodic diffractive grating 3 of a waveguide 1.

The incident angle θ of the incident light beam is defined as the angle between the average normal N of the surface and the projection of the beam of light on a plane 6, which is perpendicular to the grating orientation 7. The plane 6 is not part of the invention. As shown on figure 6, the grating comprises a repetition of shapes, which are repeated along a direction perpendicular to the grating orientation 7.

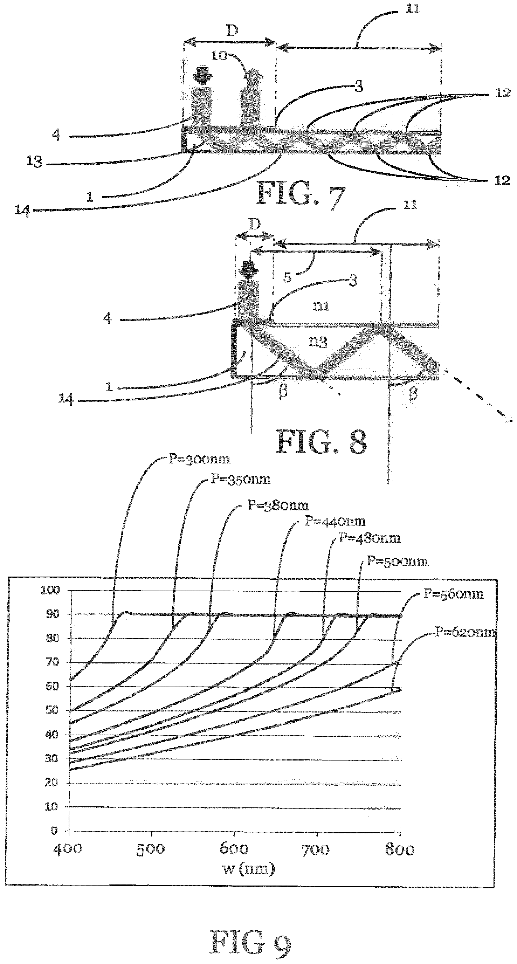

Figures 7 and 8 schematically illustrate the incident light 4 incoming on a periodic diffractive grating of a waveguide 1.

Figure 7 and 8 illustrate the influence of the waveguide thickness WT on the transmission of the light. When the waveguide comprises a section (11) designed to transmit the light by total internal reflections 12, and when the purpose of the grating is to couple the light into said section 11, the thickness WT is optimized such as to maximize the amount of light that reaches said section 11; the overall coupling efficiency may be defined as the ratio between one given mode, for example +1 or -1, of the coupled light 14 into said section 11 and the incident light 4 at a given wavelength. If the thickness is not optimally set, like in Figures 7, part of the light 10 gets decoupled from the waveguide before reaching the section of the waveguide 11 which guides the light by internal reflections. This decoupling results in a loss of the overall coupling efficiency. Once the light reaches section 11 of the waveguide, it is guided by a succession of total internal reflections 12, as long as the angle β, between the waveguide surface normal and the coupled light beam inside the waveguide is large enough. This total internal reflection angle limit is well known and depends on the refractive indices n1 and n3. For example, it is equal to 41.8° for n1=1 and n3=1.5, and equal to 38.7° for n1=1 and n3=1.6. Figure 9 shows the coupling angle β for several grating periods P of a rectangular shaped grating for the first diffraction order. Thus, using this property, it is possible to make further selection of wavelength, by making the waveguide transmit some wavelength by total internal reflections, and leave other wavelength out. When the waveguide does not comprise a section 11 designed to guide the light by total internal reflections, the coupling efficiency may be defined as the ratio between one given mode, for example +1 or -1, of the coupled light 13, which is the light that managed to cross the grating, and the incident light 4 at a given wavelength.

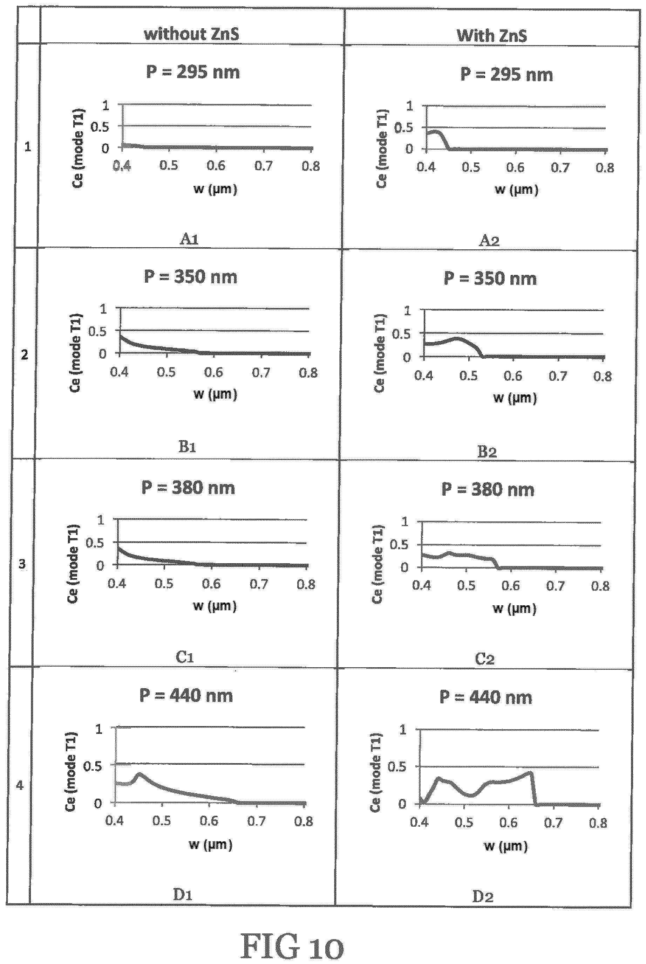

Figure 10 compares:

- in the left column, results of light coupling systems obtained by a method not being part of the invention, i.e. obtained by the method described above for a system with a rectangular pattern and without any enhancement, with
- in the right column, similar systems obtained by the method of claim 1, i.e. with an enhancement layer.

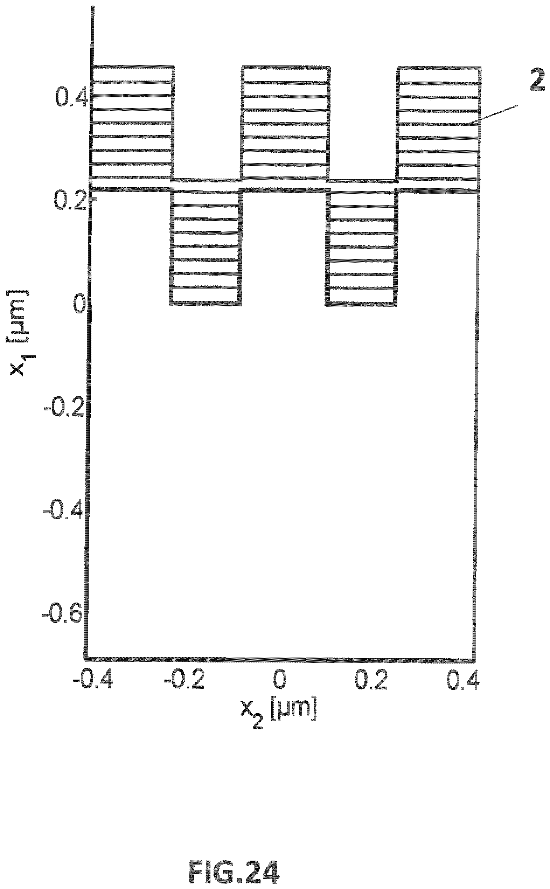

It illustrates the coupling efficiency Ce of normal incident light on a multimode waveguide for different periods P of the grating, as a function of the wavelength w. The grating depth d is 200nm. The refraction index of the waveguide n3 is 1.5. On the first column of the table, the grating is uncoated. On the second column of the table, the grating is coated with an enhancement layer made of ZnS with a thickness L=200nm. The ZnS coating enhances the coupling efficiency. Figure 24 illustrates such a ZnS coating deposited on an incoupling grating. Larger periods P shift the coupling efficiency to the red and infrared part of the spectrum.

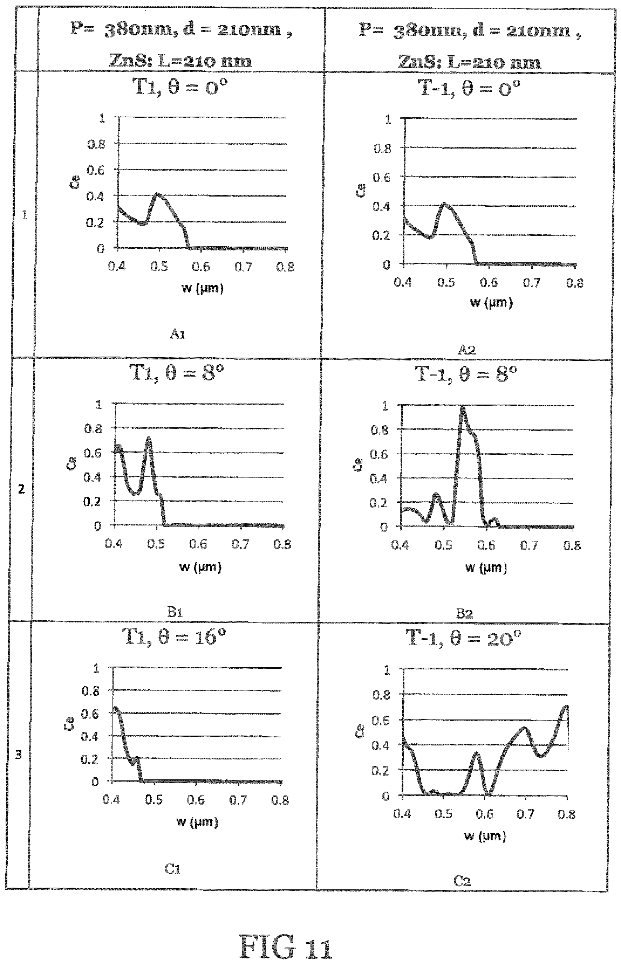

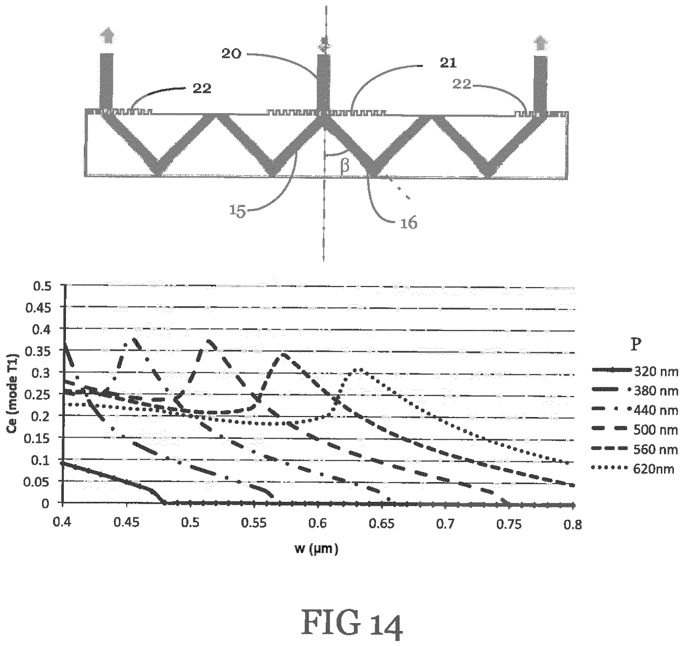

Figure 11 illustrates the coupling efficiency Ce of an incident light impinging on the grating with an angle $\Theta$, for the diffraction order 1 (T1) - in cells A1, B1 and C1-and diffraction order -1 (T-1)-in cells A2, B2 and C2 for a device obtained by a method according to claim 1. The grating depth d is 210nm, the grating period P is 380nm. The refraction index of the waveguide n3 is 1.5. The grating is coated with an enhancement layer made of ZnS with a thickness L=210nm. The figure shows that an efficiency of nearly 100% can be obtained with an incident angle $\theta = 8°$, for the diffraction order -1 and a wavelength around 550nm. The figure also shows the limitation of the coupling efficiency if the incident light is normal to the average grating surface. Figure 11 also illustrates that the method according to claim 6 can be applied by defining two target efficiency distributions in a setup according to the top of Figure 14: a target efficiency can be defined for order +1, another target efficiency can be defined for order -1; the order +1 is coupled toward the right of the waveguide, order -1 is coupled toward the left of the waveguide; the difference between the target efficiency and the computed efficiency being the sum of the differences for each mode taken separately. Said setup can be used to split the light according to its wavelength.

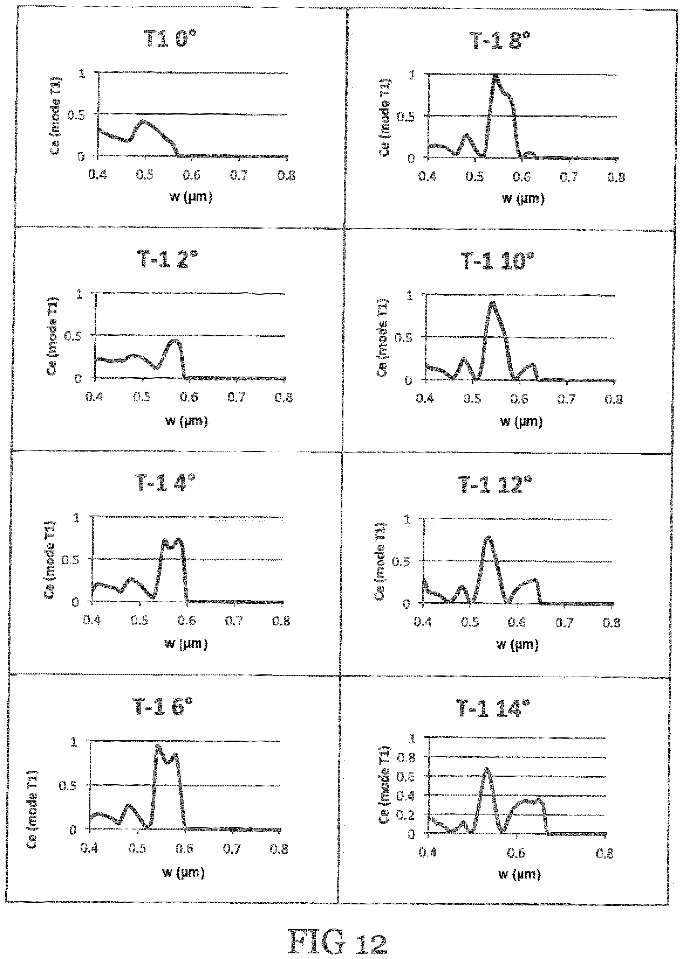

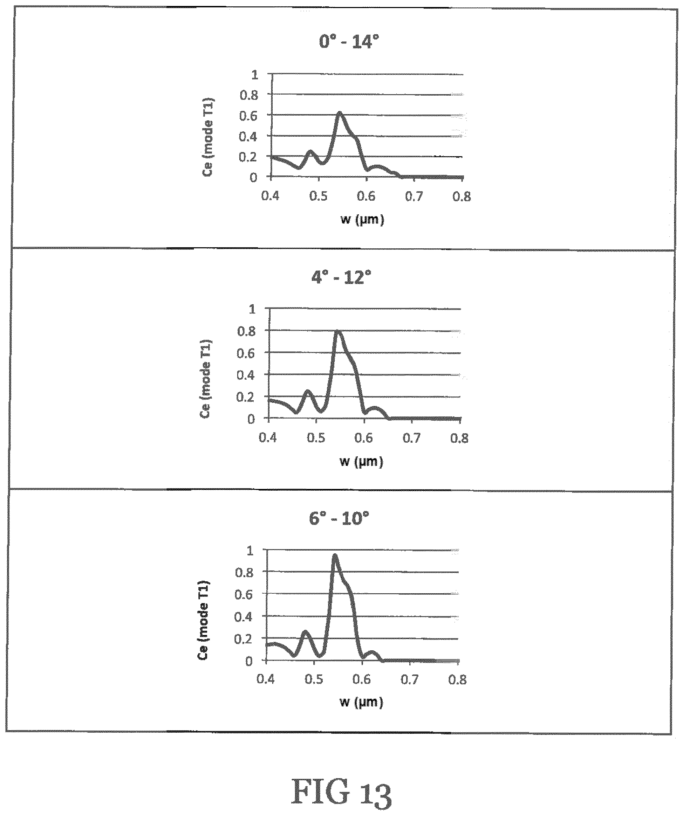

Figure 12 shows the coupling efficiency Ce for different incident angles $\theta$ or a device obtained by the method according to claim 3. The grating depth d is 210nm, the grating period P is 380nm. The refraction index of the waveguide n3 is 1.5. The grating is coated with an enhancement layer made of ZnS with a thickness L=210nm. Figure 13 combines the results of Figure 12, using the same waveguide and grating to show the coupling efficiency of a non-collimated incident light beam. The Figure shows, for example, that the coupling efficiency can reach 80% even if the incident angle $\theta$ of the input light beam varies from 4° to 12°, and can reach 90% if said angle is comprised between 6° and 10°. It shows that the incident angle standard deviation S$\theta$ has an influence on the coupling efficiency, and helps setting the incident angle standard deviation in the method of claim 1. A collimated light beam has a small standard deviation S$\theta$, as found in lasers with a beam divergence S$\theta$ of 1 to 2 mrad, whereas a non-collimated beam has a large standard deviation S$\theta$.

Figure 14 show the influence of the grating period P on the coupling efficiency as a function of wavelength w for a normal incident light beam on a device obtained according to the method of claim 1. The figure shows the diffraction order 1 (16) and the diffraction order -1 (15), which for a normal incident beam have the same coupling performance. It shows a setup where a wavefront 20 is coupled into the waveguide according to the invention through a first grating 21 and decoupled through two gratings 22. It shows that the grating can be used as a spectral filter.

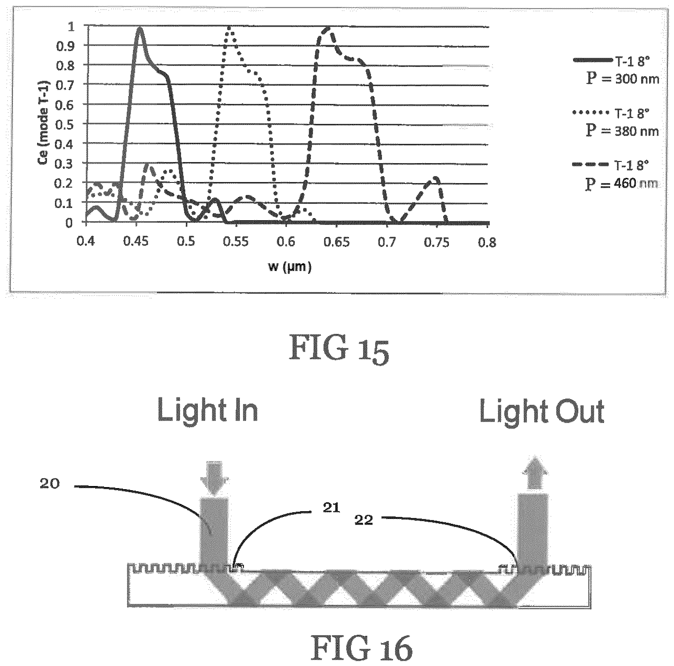

Figure 15 show the influence of the grating period P on the coupling efficiency as a function of wavelength w for an incident light beam at 8° for a device obtained by the method according to claim 1, i.e. the method described above for a light coupling system with a rectangular pattern and with an enhancement layer. The depth d of the grating is 200nm. The refraction index n3 of the grating is 1.5. The angle of the incident light with the surface normal vector $\theta$ is 8°. Longer periods P shift the coupling efficiency to the red and infrared part of the spectrum. Figure 16 shows a setup where a wavefront 20 is coupled into the waveguide through a first grating 21 and decoupled through a second grating 22. This setup can be used to transmit an image of an object located in front of grating 21 to a remote sensor located in front of grating 22 and sensibly reduces the required free space that would be necessary in a conventional imaging situation.

**Optimization and method**

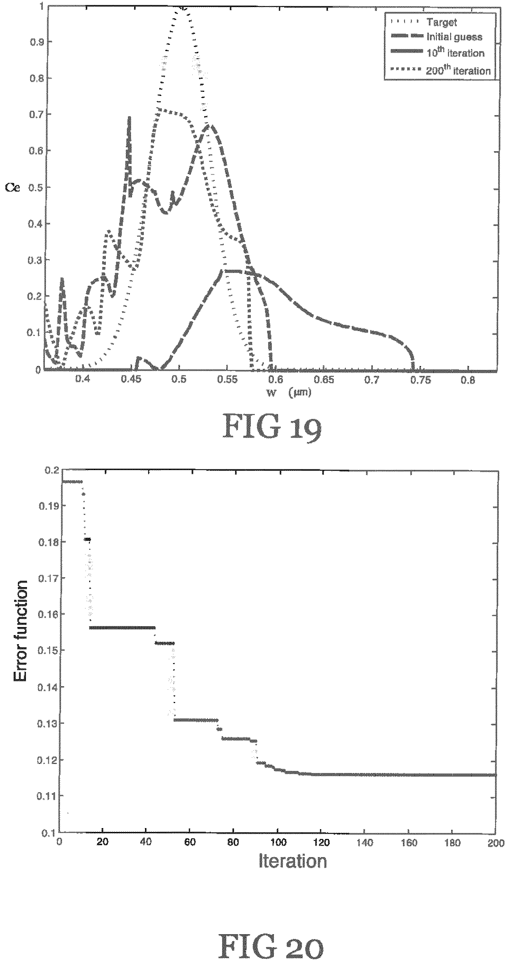

Figure 19 shows the coupling efficiency Ce of a grating and waveguide during the optimization of the second set of parameters of the grating in the method according to claim 1. The target coupling efficiency is given as a function of wavelength w: it is a Gaussian with standard deviation $\sigma = 30$nm and average value $\mu = 500$nm, with a peak coupling efficiency Ce=ioo% at w=500nm. The optimization step minimizes the sum at every wavelength comprised between 360nm and 830nm of the squared differences between the computed coupling efficiency and the target efficiency. The grating shape is rectangular with a fill factor of 50%. The grating is coated with an enhancement layer of ZnS. The grating period P is constrained between 250nm and 1000nm, the grating depth d is constrained between mm and 400nm. The enhancement layer thickness L is constrained between mm and 250nm. The incident angle θ is constrained between 0° and 10°, and its standard deviation Sθ is set to 0.5°. The starting guess for the grating parameters are the following: P = 500nm, d = 100nm, L = 100nm and θ = 5°. After completion of the optimization-after 200 iterations-the resulting structure has the following parameters: P = 406nm, d = 147nm, L = 176nm and θ = 10°, and the coupling efficiency is shown in Figure 19. Figure 20 shows the evolution of the sum of squared difference between the target efficiency and the computed efficiency as a function of the iteration step in the optimization setup referred by Figure 19.

If a parameter of the first parameter set according to this invention is not known a-priori, the method according to this invention can be applied for several choices of said parameter, and the best result, i.e. the one that results in the minimal difference between the target efficiency and the computed efficiency, is found by trial-and-error.

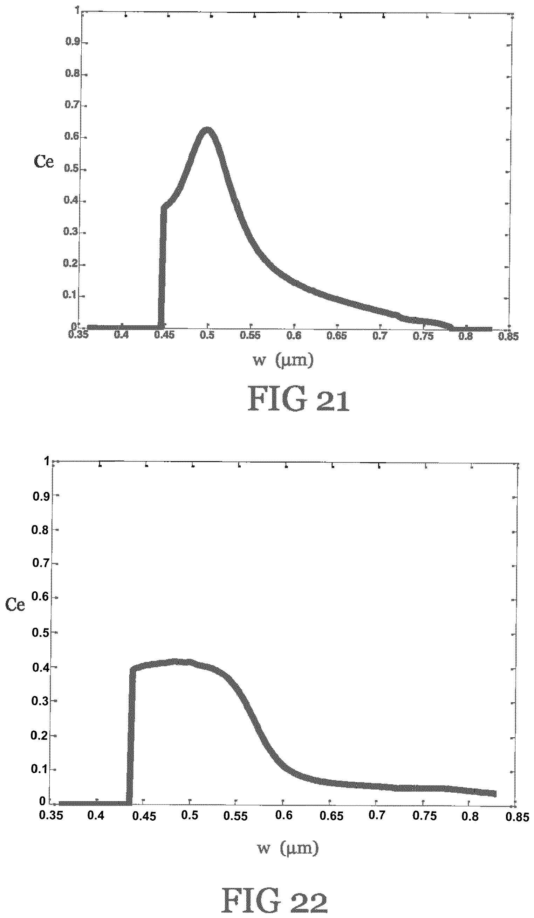

Figure 21 and 22 show the coupling efficiency Ce for the first diffraction order obtained by a method, not being part of the invention, for a light coupling system with a rectangular pattern with an uncoated grating. The grating is made of Polycarbonate PC, which has an approximate refraction n3 = 1.57. The target wavelength is a Gaussian with a mean value of 500nm and a standard deviation of 30nm. The incident angle θ is constrained between -40° and 40°. The grating is rectangular shaped. In Figure 21, the optimization is carried out for an polarized incident light TE, parallel to the grating structures, and results in a grating with period P=586nm, a depth d=271nm, incident angle θ = 13.6°, a fill factor A/P = 0.41, and a coupling efficiency Ce that reaches 63% in its peak value. In Figure 20, the optimization is carried out for a polarized incident light TM, perpendicular to the grating structures, and results in a grating with period P=942nm, a depth d=395nm, an incident angle θ = 32.5°, a fill factor A/P = 0.39, and a coupling efficiency Ce that reaches 42% in its peak value.

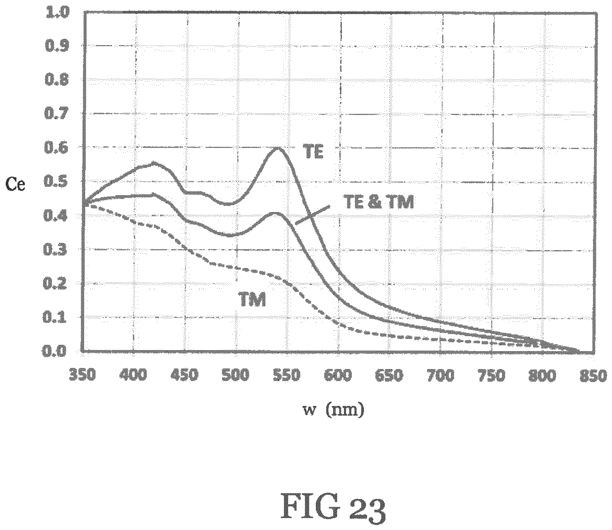

Figure 23 shows the coupling efficiency Ce for the first diffraction order obtained by a method, not being part of the invention, with an uncoated grating. The grating is made of Polycarbonate PC, which has an approximate refraction n3 = 1.57. The target wavelength is a Gaussian with a mean value of 532nm and a standard deviation of 30nm. The incident angle θ is constrained between -40° and 40°. The grating is rectangular shaped. Figure 23 shows the resulting coupling efficiency for TE, TM and TE&TM, but performs the optimization for both polarizations TE&TM, which is the equivalent of performing an optimization for unpolarized light. It results in a grating with period P=638nm, a depth d=321nm, an incident angle θ = 14.9°, a fill factor A/P = 0.43, and a coupling efficiency Ce that reaches 41% in its peak value. Fig.24 shows a typical ZnS enhancement coating used for the efficient coupling of unpolarized light.

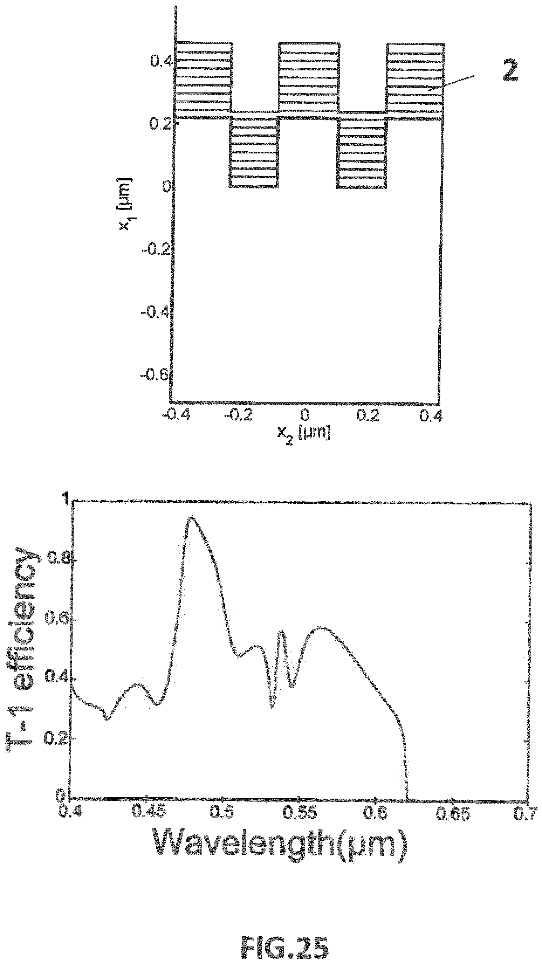

Figures 25 to 30 show more results obtained by the optimization method for different wavelengths, different incidence angles and for unpolarized light. The structures obtained are optimized for unpolarized light and are therefore optimized for any incident light beam, having only one polarization, any linear polarization, a circular or ellipsoidal polarization and any time-dependent or position-dependent polarization. In particular, Figure 25 shows a ZnS enhancement coating optimized for an incidence angle of 14° for blue (450-495nm) and unpolarized light, i.e. the TE and TM components of the incident light beam have the same amplitudes. In this case (Fig.25) case the ZnS layer thickness is 240nm, evaporated on a 340nm period and 220nm deep, 0.56 fill factor grating realized on PC.

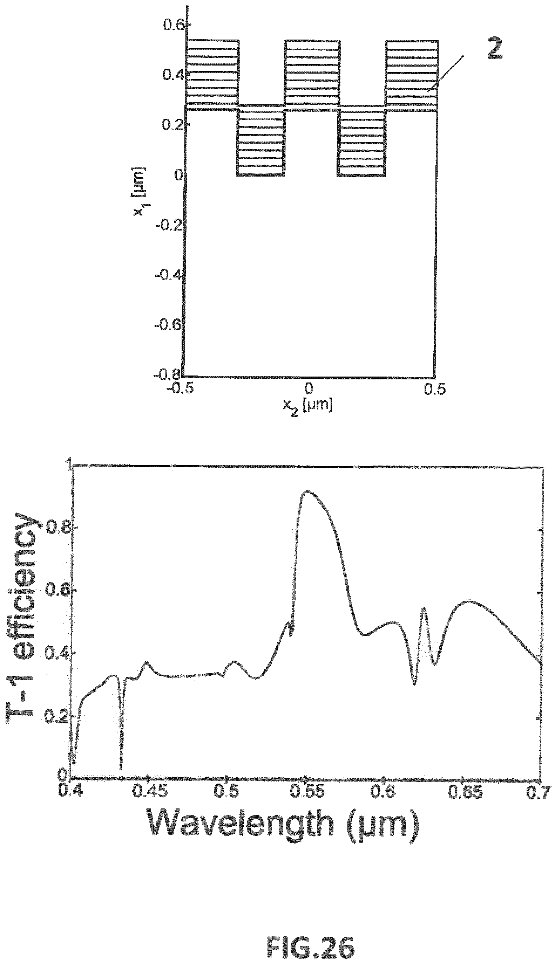

Figure 26 shows a ZnS enhancement coating optimized for an incidence angle of 14° for green (460-485nm) and unpolarized light. In this case (Fig.26) case the ZnS layer thickness is 280nm, evaporated on a 400nm period and 260nm deep, 0.54 fill factor grating realized on PC.

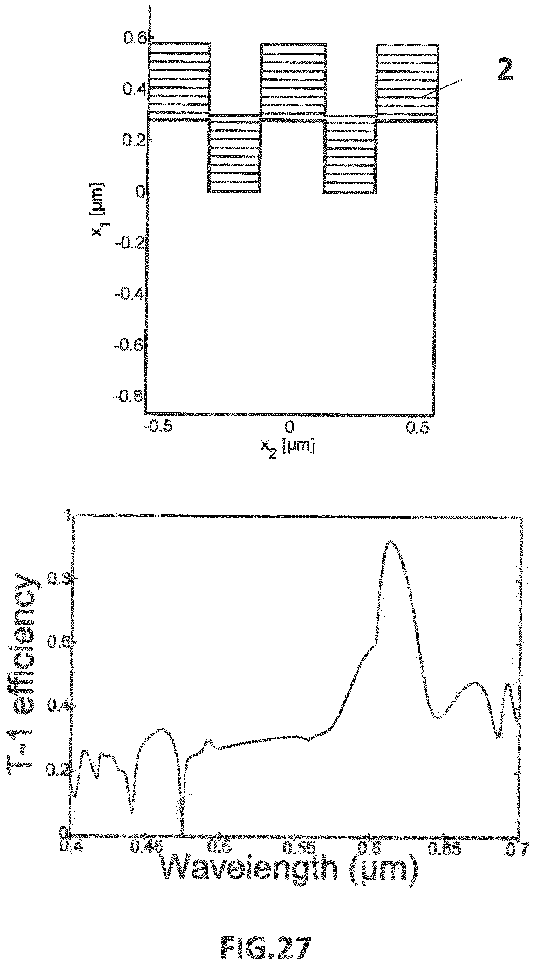

Figure 27 shows a ZnS enhancement coating optimized for an incidence angle of 14° for red (600-640nm) and unpolarized light. In this case (Fig.27) case the ZnS layer thickness is 300nm, evaporated on a 450nm period and 280nm deep, 0.56 fill factor grating realized on PC.

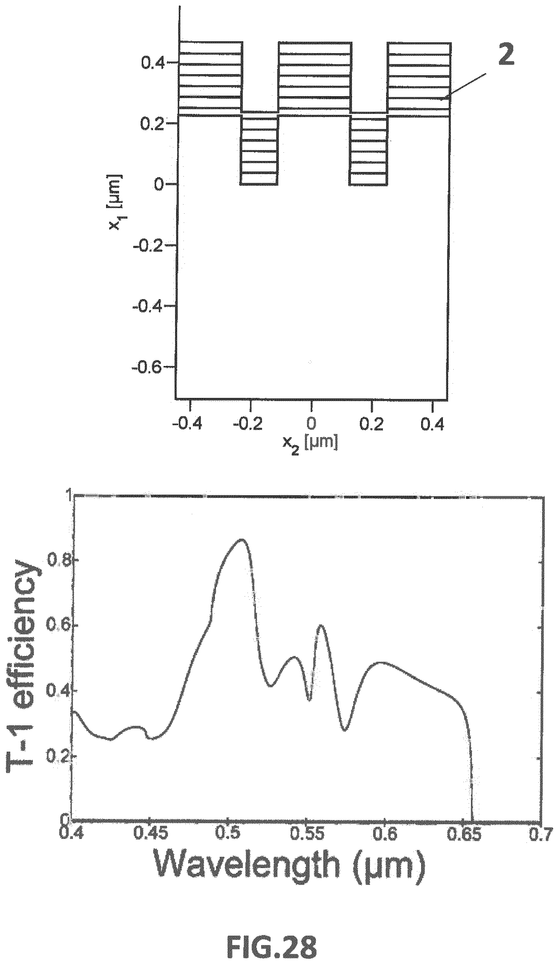

Figure 28 shows a ZnS enhancement coating optimized for an incidence angle of 15° for blue-green-red and unpolarized light. In this case (Fig.28) case the ZnS layer thickness is 240nm, evaporated on a 360nm period and 230nm deep, 0.66 fill factor grating realized on PC.

It is possible to perform a medium level or high-level optimization. In the case of a medium level optimization the efficiency will be acceptable while the devices will be easy to produce and fabricate thanks to their low aspect ratio, while for a high-level optimization the efficiency will be maximal but the cost and effort will be higher as the manufacturing tolerances are tighter. Examples of both possibilities are summarized in the next table:

| | Medium Level Optimization | | | High Level Optimization | | |
|---|---|---|---|---|---|---|
| Color target [nm] | BLUE 460-485nm | GREEN 560-590nm | RED 600-640nm | BLUE 460-485nm | GREEN 560-590nm | RED 600-640nm |
| p [nm] | 280 +/-10 | 340 +/-10 | 360 +/-10 | 340 +/-10 | 400 +/-10 | 450 +/-10 |
| d [nm] | 100 +/-10 | 140 +/-10 | 150 +/-10 | 220 +/-10 | 260 +/-10 | 280 +/-10 |

(continued)

| Color target [nm] | Medium Level Optimization | | | High Level Optimization | | |
|---|---|---|---|---|---|---|
| | BLUE 460-485nm | GREEN 560-590nm | RED 600-640nm | BLUE 460-485nm | GREEN 560-590nm | RED 600-640nm |
| Fill factor | 0.4 +/-0.05 | 0.4 +/- 0.08 | 0.4 +/-0.1 | 0.56 +/-0.05 | 0.54 +/-0.08 | 0.56 +/-0.08 |
| L[nm] ZNS Coating | 140 +/-10 | 140 +/-10 | 180 +/-15 | 240 +/-10 | 280 +/-10 | 300 +/-10 |
| Illumination Angle | -10° | -8° | -10° | -14° | -14° | -14° |
| Averaged efficiency | >60% | >60% | >60% | >80% | >80% | >80% |

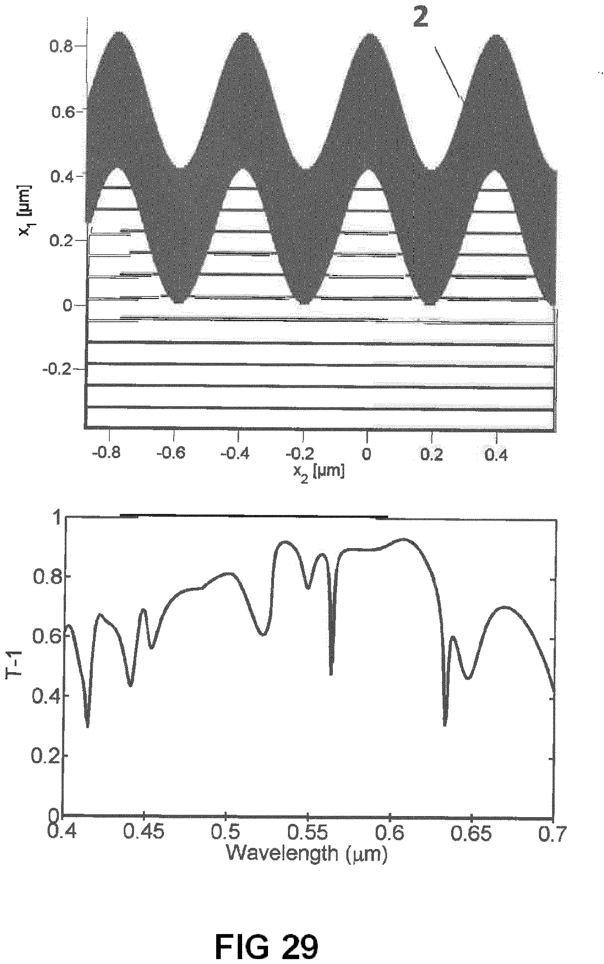

Finally, Figure 29 shows the obtained efficiency in case of a sinusoidal grating for an incidence angle of 17° and for red (615-630nm), green (560-575nm) and blue (460-480nm). The sinusoidal depth of the sinusoidal grating (Fig. 29) is smaller than 1 period, the period is 390nm, the ZnS coating thickness is 350nm and the ZnS coating is deposited on PC. When the sinusoidal grating of Fig.29 is illuminated, the diffracted light beam has a flat spectrum in the visible range and appears white to an observer.

All embodiments and application examples have been described with reference to the optical field. This does not represent a restriction of the applicability of the method and the device herein described above may be applied to other frequency domains of the electromagnetic spectrum. Those familiar with the art in medium and far infrared, deep ultraviolet, millimeter waves, terahertz waves and microwaves will easily adapt the described embodiments to the materials, scales and technologies pertaining to each of these spectral domains, although these do not fall within the scope of the present claims.

All embodiments of the present invention have been made with reference to planar substrates. This does not represent a limitation to planar surfaces. Those familiar with the art will easily adapt the described embodiments to curved surfaces.

**Claims**

1. Method for constructing a light coupling system wherein a grating (3) is manufactured on a surface of a multimode waveguide (1), said grating (3) defining the light entrance of said multimode waveguide (1) for an incident light beam (4), said grating (3) comprising a repetition of patterns, having each a pattern width and a pattern length, the patterns being repeated along a direction perpendicular to said pattern length, said grating having a shape defined in a plane perpendicular to said pattern length, chosen among a rectangular shape, sinusoidal shape, a triangular shape or a staircase shape,

   said method comprising a step of choosing a first set of parameters comprising:

   • wavelength distribution of the incident light (4) to be transmitted by the multimode waveguide,
   • polarized or unpolarized nature of said incident light,
   • the standard deviation $S\Theta$ of the incident angle $\Theta$ of incident light (4) with respect to the multimode waveguide (1), said incident angle $\Theta$ being defined as the angle between the average normal N of said surface and the projection of the beam of light on a plane, which is perpendicular to the pattern length orientation,
   • shape of the patterns, which is designed to have its local surface normal Ns, in any location of said shape, making an angle $\alpha$ with respect to the average normal N of said surface, said angle $\alpha$ being comprised between $\alpha=-90°$ and $\alpha=90°$,
   • refractive index n1 of the medium surrounding the multimode waveguide,
   • a multimode waveguide refractive index n3,

   said method comprising a step of choosing a second set of parameters comprising:

   • grating period P, separating two adjacent patterns,

• grating depth d between the highest and the lowest point of the pattern,
• incident mean angle θ of the incident light (4) with respect to the multimode waveguide,

wherein said method comprises a step of optimization of the second set of parameters to obtain an optimized second set of parameters, and comprises the steps of:

• defining a target efficiency given as an input distribution with respect to the wavelength of the incident light (4),
• computing the efficiency with respect to the wavelength of the incident light (4) on the basis of the first and second sets of parameters,
• minimizing the difference between the target efficiency and the computed efficiency by modifying each parameter of the second set of parameters,

said step of optimization being performed to obtain a transmission efficiency Ce of the incident light (4) crossing through the grating (3) into said multimode waveguide (1) for the first or the second diffractive order exceeding 35% for unpolarized light, or exceeding 50% for polarized light, at a given wavelength of the incident light (4), said grating (3) having a grating length D measured along said direction perpendicular to the pattern length, said grating length D being related to the thickness WT of the multimode waveguide and to the angle β between the multimode waveguide average normal and the light beam (14) inside the multimode waveguide, said length D being defined by the following inequality:

$$D \leq 2 \cdot WT \cdot \tan \beta$$

said method comprising a step of manufacturing the grating (3) on the surface of the multimode waveguide according to the chosen first set of parameters and to said optimized second set of parameters, wherein said grating (3) is covered by an enhancement layer (2) whose refractive index n2 belongs to the first set of parameters, and whose thickness L belongs to the second set of parameters, said enhancement layer (2) having a shape conformal with the shape of said patterns, and having a thickness L between 10nm and 500nm, preferably between 10nm and 200nm,
and wherein
the optimization step comprises the optimization of said layer thickness L, and n2-n1 is greater or equal to 0.3, preferably greater or equal to 0.5 preferably greater or equal to 0.8, and
n2-n3 is greater or equal to 0.3, preferably greater or equal to 0.5 preferably greater or equal to 0.8, wherein, when the shape of the pattern is rectangular, the optimization step further comprises the optimization of the rectangular fill factor A/P defined as the width of a rectangle A compared to the grating period P.

2. Method according to claim 1, wherein the enhancement layer (2) is made of a material chosen among: ZnS, or TiO2, or HfO2, or Ta2O5 , or ZrO2, or AIN, or Al2O3 or ZnO or any combination of these materials.

3. Method according claim 1, wherein the optimization step is designed to obtain a transmission efficiency of the incident light (4) into said waveguide (1) for the first or the second diffractive order exceeding 50% preferably exceeding 70% preferably exceeding 90% at a given wavelength of the incident light.

4. An optical system comprising a light coupling system, obtainable by a method according to any one of claims 1 to 3, for coupling a polarized or an unpolarized incident light beam (4) into a multimode waveguide (1) , and a light input component configured for providing said light beam to a grating (3) of the multimodal waveguide (1), the light beam (4) having a given wavelength distribution, and the optical system being immersed in a medium with refractive index n1,
said light coupling system comprising:

• the multimode waveguide (1) having a refractive index n3,
• the grating manufactured on a surface of the multimode waveguide (1) for coupling the light beam (4) into the multimode waveguide, the grating defining a light entrance surface and comprising a grating period P and a grating depth d,

wherein:

said grating (3) comprises a repetition of patterns having a shape that has its local surface normal Ns, in any location of said shape, making an angle α with respect to the average normal N of the surface of the multimode waveguide, said angle α being comprised between α=-90° and α=90°, the grating depth d being defined between the highest and the lowest point of the pattern,

and wherein said shape is chosen among a rectangular shape, sinusoidal shape, a triangular shape or a staircase shape,

said grating has a length D, measured on said surface, in the direction of the diffracted beam, said length D being related to the thickness WT of the multimode waveguide (1) and to the angle β between the multimode waveguide surface normal and a light beam (14) inside said multimode waveguide (1) , said length D being defined by the following inequality:

$$D \leq 2 \cdot WT \cdot \tan\beta$$

the light coupling system comprising an enhancement layer (2) covering the grating (3) having a refractive index n2 and being made of a material chosen among: ZnS, or TiO2, or HfO2, or Ta2O5, or ZrO2, or AlN, or Al2O3 or ZnO or any combination of these materials, the enhancement layer (2) having a shape conformal with the shape of said patterns and

• wherein n2-n1 is greater or equal to 0.3, preferably greater or equal to 0.5 preferably greater or equal to 0.8, and
• wherein n2-n3 is greater or equal to 0.3, preferably greater or equal to 0.5 preferably greater or equal to 0.8, and
• wherein the thickness L of said enhancement layer (2) on said grating (3) is between 10nm and 500nm, preferably between 10nm and 200nm, the light coupling system provides a transmission efficiency Ce of the incident light beam (4) into said multimode waveguide (3), for the first or the second diffractive order, exceeding 35% for unpolarized light at a given wavelength of the incident light beam, or exceeding 50% , preferably exceeding 70%, preferably exceeding 90% for polarized light at a given wavelength of the incident light beam (4), wherein, when

the shape of the pattern is rectangular, the fill factor A/P, defined as the width of a rectangle A compared to the grating period P, is comprised between 10% and 90%, preferably between 40% and 60%.

5. The optical system according to claim 4 wherein the multimode waveguide

(1) is made of Glass, or Quartz, or Polymer, or SolGel.

6. The optical system according to claim 4, wherein the multimode waveguide

(1) is made of Polycarbonate PC or Polymethyl methacrylate PMMA or Polyethylene terephthalate PET.

7. The optical system according to any of claims 4 - 6, wherein said grating depth d between the highest and the lowest point of the grating pattern is comprised between 10nm and 1000nm, preferably between 20nm and 400nm.

8. The optical system according to any of claims 4 - 7, wherein the grating is manufactured on the waveguide top surface and wherein the waveguide thickness WT is larger or equal to 1 micron, preferably larger or equal to 10 microns, preferably larger or equal to 0.5 mm.

9. The optical system according to any of claims 4 - 8, wherein the thickness L of the enhancement layer (2) is comprised between 100nm and 200nm.

10. The optical system according to any of claims 4 - 9 for coupling the incident light beam (4) having a wavelength comprised between 400nm and 700nm, wherein the grating period P, separating two adjacent patterns, is comprised between 230nm and 840nm.

11. The optical system according to any of claims 4 - 9 for coupling the incident light beam (4) having a wavelength comprised between 700nm and 2500nm, wherein the grating period P, separating two adjacent patterns, is comprised between 580nm and 3000nm.

12. The optical system according to any of claims 4 - 9 for coupling the incident light beam (4) having a wavelength comprised between 250nm and 400nm, wherein the grating period P, separating two adjacent patterns, is comprised between 180nm and 560nm.

**Patentansprüche**

1. Verfahren zum Herstellen eines Lichteinkopplungssystems, wobei ein Gitter (3) auf einer Oberfläche eines Mehrmoden-Wellenleiters (1) hergestellt wird, wobei das Gitter (3) den Lichteintritt des Mehrmoden-Wellenleiters (1) für einen einfallenden Lichtstrahl (4) definiert, wobei das Gitter (3) eine Wiederholung von Mustern umfasst, die jeweils eine Musterbreite und eine Musterlänge aufweisen, wobei die Muster entlang einer zur Musterlänge senkrechten Richtung wiederholt werden, wobei das Gitter eine Form aufweist, die in einer zur Musterlänge senkrechten Ebene definiert ist, ausgewählt aus einer rechteckigen Form, einer sinusförmigen Form, einer dreieckigen Form oder einer Treppenform,

   wobei das Verfahren einen Schritt des Auswählens eines ersten Parametersatzes umfasst, umfassend:

   - Wellenlängenverteilung des einfallenden Lichts (4), das durch den Mehrmoden-Wellenleiter übertragen werden soll,
   - polarisierte oder unpolarisierte Natur des einfallenden Lichts,
   - die Standardabweichung $S\Theta$ des Einfallswinkels $\Theta$ von einfallendem Licht (4) zum Mehrmoden-Wellenleiter (1), wobei der Einfallswinkel $\Theta$ als der Winkel zwischen der durchschnittlichen Normalen N der Oberfläche und der Projektion des Lichtstrahls auf eine Ebene definiert ist, die senkrecht zur Musterlängenausrichtung ist,
   - Form der Muster, die derart gestaltet ist, dass ihre lokale Flächennormale Ns an jeder Stelle der Form einen Winkel $\alpha$ zur durchschnittlichen Normalen N der Oberfläche bildet, wobei der Winkel a zwischen $\alpha=-90°$ und $\alpha=90°$ liegt,
   - Brechungsindex n1 des den Mehrmoden-Wellenleiter umgebenden Mediums,
   - einen Brechungsindex n3 des Mehrmoden-Wellenleiters,

   wobei das Verfahren einen Schritt des Auswählens eines zweiten Parametersatzes umfasst, umfassend:

   - Gitterperiode P, die zwei benachbarte Muster trennt,
   - Gittertiefe d zwischen dem höchsten und dem niedrigsten Punkt des Musters,
   - mittlerer Einfallswinkel $\theta$ des einfallenden Lichts (4) zum Mehrmoden-Wellenleiter,

   wobei das Verfahren einen Schritt des Optimierens des zweiten Parametersatzes umfasst, um einen optimierten zweiten Parametersatz zu erhalten, und die folgenden Schritte umfasst:

   - Definieren einer Zieleffizienz, die als Eingangsverteilung in Bezug auf die Wellenlänge des einfallenden Lichts (4) gegeben ist,
   - Berechnen der Effizienz in Bezug auf die Wellenlänge des einfallenden Lichts (4) auf der Grundlage des ersten und des zweiten Parametersatzes,
   - Minimieren der Differenz zwischen der Zieleffizienz und der berechneten Effizienz durch Ändern jedes Parameters des zweiten Parametersatzes,

   wobei der Optimierungsschritt ausgeführt wird, um eine Übertragungseffizienz Ce des einfallenden Lichts (4), das durch das Gitter (3) in den Mehrmoden-Wellenleiter (1) eintritt, für die erste oder die zweite Beugungsordnung zu erhalten, die bei einer gegebenen Wellenlänge des einfallenden Lichts (4) 35% bei unpolarisiertem Licht übersteigt oder 50% bei polarisiertem Licht übersteigt,
   wobei das Gitter (3) eine entlang der zur Musterlänge senkrechten Richtung gemessene Gitterlänge D aufweist, wobei die Gitterlänge D mit der Dicke WT des Mehrmoden-Wellenleiters und dem Winkel $\beta$ zwischen der durchschnittlichen Normalen des Mehrmoden-Wellenleiters und dem Lichtstrahl (14) innerhalb des Mehrmoden-Wellenleiters in Beziehung steht, wobei die Länge D durch die folgende Ungleichung definiert ist:

$$D \leq 2 \cdot WT \cdot \tan \beta$$

   wobei das Verfahren einen Schritt des Herstellens des Gitters (3) auf der Oberfläche des Mehrmoden-Wellenleiters gemäß dem gewählten ersten Parametersatz und dem optimierten zweiten Parametersatz umfasst, wobei das Gitter (3) mit einer Verstärkungsschicht (2) bedeckt ist, deren Brechungsindex n2 zum ersten Parametersatz gehört und deren Dicke L zum zweiten Parametersatz gehört, wobei die Verstärkungsschicht (2) eine Form aufweist, die der Form der Muster entspricht, und eine Dicke L zwischen 10nm und 500nm, vorzugsweise zwischen 10nm und 200nm, aufweist,
und wobei

der Optimierungsschritt das Optimieren der Schichtdicke L umfasst und n2-n1 größer oder gleich 0,3, vorzugsweise größer oder gleich 0,5, vorzugsweise größer oder gleich 0,8 ist, und

n2-n3 größer oder gleich 0,3, vorzugsweise größer oder gleich 0,5, vorzugsweise größer oder gleich 0,8 ist, wobei, wenn die Form des Musters rechteckig ist, der Optimierungsschritt ferner das Optimieren des Rechteckige Füllfaktors A/P umfasst, der als die Breite eines Rechtecks A im Vergleich zur Gitterperiode P definiert ist.

2. Verfahren nach Anspruch 1, wobei die Verstärkungsschicht (2) aus einem Material besteht, das aus ZnS oder TiO$_2$ oder HfO$_2$ oder Ta$_2$O$_5$ oder ZrO$_2$ oder AlN oder Al$_2$O$_3$ oder ZnO oder einer Kombination dieser Materialien ausgewählt ist.

3. Verfahren nach Anspruch 1, wobei der Optimierungsschritt dazu gestaltet ist, eine Übertragungseffizienz des einfallenden Lichts (4) in den Wellenleiter (1) für die erste oder die zweite Beugungsordnung zu erhalten, die bei einer gegebenen Wellenlänge des einfallenden Lichts 50% übersteigt, vorzugsweise 70% übersteigt, vorzugsweise 90% übersteigt.

4. Optisches System, umfassend ein Lichteinkopplungssystem, das durch ein Verfahren nach einem der Ansprüche 1 bis 3 zum Einkoppeln eines polarisierten oder unpolarisierten einfallenden Lichtstrahls (4) in einen Mehrmoden-Wellenleiter (1) erhalten werden kann, und eine Lichteingangskomponente, die dazu eingerichtet ist, den Lichtstrahl für ein Gitter (3) des Mehrmoden-Wellenleiters (1) bereitzustellen, wobei der Lichtstrahl (4) eine gegebene Wellenlängenverteilung aufweist und das optische System in ein Medium mit Brechungsindex n1 eingetaucht ist, wobei das Lichteinkopplungssystem umfasst:

• den Mehrmoden-Wellenleiter (1) mit einem Brechungsindex n3,
• das auf einer Oberfläche des Mehrmoden-Wellenleiters (1) hergestellte Gitter zum Einkoppeln des Lichtstrahls (4) in den Mehrmoden-Wellenleiter, wobei das Gitter eine Lichteintrittsfläche definiert und eine Gitterperiode P und eine Gittertiefe d umfasst,

wobei:

das Gitter (3) eine Wiederholung von Mustern mit einer Form umfasst, die ihre eigene lokale Flächennormale Ns an jeder Stelle der Form aufweist, die einen Winkel α zur durchschnittlichen Normalen N der Oberfläche des Mehrmoden-Wellenleiters bildet, wobei der Winkel α zwischen α=-90° und α=90° liegt, wobei die Gittertiefe d zwischen dem höchsten und dem niedrigsten Punkt der Muster definiert ist, und wobei die Form aus einer rechteckigen Form, einer sinusförmigen Form, einer dreieckigen Form oder einer Treppenform ausgewählt ist, das Gitter eine auf der Oberfläche in Richtung des gebeugten Strahls gemessene Länge D aufweist, wobei die Länge D mit der Dicke WT des Mehrmoden-Wellenleiters (1) und dem Winkel β zwischen der Normalen der Oberfläche des Mehrmoden-Wellenleiters und einem Lichtstrahl (14) innerhalb des Mehrmoden-Wellenleiters (1) in Beziehung steht, wobei die Länge D durch die folgende Ungleichung definiert ist:

$$D \leq 2 \cdot WT \cdot \tan \beta$$

das Lichteinkopplungssystem eine das Gitter (3) bedeckende Verstärkungsschicht (2) umfasst, die einen Brechungsindex n2 aufweist und aus einem Material besteht, das aus ZnS oder TiO$_2$ oder HfO$_2$ oder Ta$_2$O$_5$ oder ZrO$_2$ oder AlN oder Al$_2$O$_3$ oder ZnO oder einer Kombination dieser Materialien ausgewählt ist, wobei die Verstärkungsschicht (2) eine der Form der Muster entsprechende Form aufweist und

• wobei n2-n1 größer oder gleich 0,3, vorzugsweise größer oder gleich 0,5, vorzugsweise größer oder gleich 0,8 ist, und
• wobei n2-n3 größer oder gleich 0,3, vorzugsweise größer oder gleich 0,5, vorzugsweise größer oder gleich 0,8 ist, und

wobei die Dicke L der Verstärkungsschicht (2) auf dem Gitter (3) zwischen 10nm und 500nm, vorzugsweise zwischen 10nm und 200nm, beträgt, wobei das Lichteinkopplungssystem eine Übertragungseffizienz Ce des einfallenden Lichtstrahls (4) in den Mehrmoden-Wellenleiter (3) für die erste oder die zweite Beugungsordnung bietet, die bei unpolarisiertem Licht bei einer gegebenen Wellenlänge des einfallenden Lichtstrahls 35% übersteigt oder bei polarisiertem Licht bei einer gegebenen Wellenlänge des einfallenden Lichtstrahls (4) 50% übersteigt, vorzugsweise 70% übersteigt, vorzugsweise 90% übersteigt, wobei, wenn die Form des Musters rechteckig ist, der Füllfaktor A/P, der als die Breite eines Rechtecks A im Vergleich zur Gitterperiode P definiert ist, zwischen 10% und 90%, vorzugsweise zwischen 40% und 60%, beträgt.

5. Optisches System nach Anspruch 4, wobei der Mehrmoden-Wellenleiter (1) aus Glas oder Quarz oder Polymer oder Sol-Gel besteht.

6. Optisches System nach Anspruch 4, wobei der Mehrmoden-Wellenleiter (1) aus Polycarbonat PC oder Polymethylmethacrylat PMMA oder Polyethylenterephthalat PET besteht.

7. Optisches System nach einem der Ansprüche 4 bis 6, wobei die Gittertiefe d zwischen dem höchsten und dem niedrigsten Punkt des Gittermusters zwischen 10nm und 1000nm, vorzugsweise zwischen 20nm und 400nm, beträgt.

8. Optisches System nach einem der Ansprüche 4 bis 7, wobei das Gitter auf der oberen Oberfläche des Wellenleiters hergestellt ist und wobei die Wellenleiterdicke WT größer oder gleich 1 Mikrometer, vorzugsweise größer oder gleich 10 Mikrometer, vorzugsweise größer oder gleich 0,5 mm, ist.

9. Optisches System nach einem der Ansprüche 4 bis 8, wobei die Dicke L der Verstärkungsschicht (2) zwischen 100nm und 200nm beträgt.

10. Optisches System nach einem der Ansprüche 4 bis 9 zum Einkoppeln des einfallenden Lichtstrahls (4) mit einer Wellenlänge zwischen 400nm und 700nm, wobei die Gitterperiode P, die zwei benachbarte Muster trennt, zwischen 230nm und 840nm beträgt.

11. Optisches System nach einem der Ansprüche 4 bis 9 zum Einkoppeln des einfallenden Lichtstrahls (4) mit einer Wellenlänge zwischen 700nm und 2500nm, wobei die Gitterperiode P, die zwei benachbarte Muster trennt, zwischen 580nm und 3000nm beträgt.

12. Optisches System nach einem der Ansprüche 4 bis 9 zum Einkoppeln des einfallenden Lichtstrahls (4) mit einer Wellenlänge zwischen 250nm und 400nm, wobei die Gitterperiode P, die zwei benachbarte Muster trennt, zwischen 180nm und 560nm beträgt.

**Revendications**

1. Procédé de construction d'un système de couplage de lumière dans lequel un réseau (3) est fabriqué sur une surface d'un guide d'ondes multimode (1), ledit réseau (3) définissant l'entrée de lumière dudit guide d'ondes multimode (1) pour un faisceau lumineux incident (4), ledit réseau (3) comprenant une répétition de motifs, présentant chacun une largeur de motif et une longueur de motif, les motifs étant répétés le long d'une direction perpendiculaire à ladite longueur de motif, ledit réseau présentant une forme définie dans un plan perpendiculaire à ladite longueur de motif, sélectionnée parmi une forme rectangulaire, une forme sinusoïdale, une forme triangulaire ou en forme d'escalier, ledit procédé comprenant une étape de sélection d'un premier ensemble de paramètres comprenant :

  • la distribution des longueurs d'onde de la lumière incidente (4) à transmettre par le guide d'ondes multimode,
  • la nature polarisée ou non polarisée de ladite lumière incidente,
  • l'écart-type SΘ de l'angle incident Θ de lumière incidente (4) par rapport au guide d'ondes multimode (1), ledit angle incident Θ étant défini comme l'angle entre la normale moyenne N de ladite surface et la projection du faisceau lumineux sur un plan, qui est perpendiculaire à l'orientation de longueur de motif,
  • la forme des motifs, qui est conçue pour que sa surface locale normale Ns, en tout emplacement de ladite forme, fasse un angle $\alpha$ par rapport à la normale moyenne N de ladite surface, ledit angle $\alpha$ étant situé entre $\alpha$=-90° et $\alpha$=90°,
  • l'indice de réfraction n1 du milieu entourant le guide d'ondes multimode,
  • un indice de réfraction n3 de guide d'ondes multimode,

ledit procédé comprenant une étape de sélection d'un second ensemble de paramètres comprenant :

- la période P de réseau, séparant deux motifs adjacents,
- la profondeur d de réseau entre le point le plus élevé et le point le plus bas du motif,
- l'angle moyen incident θ de la lumière incidente (4) par rapport au guide d'ondes multimode,

ledit procédé comprenant une étape d'optimisation du second ensemble de paramètres afin d'obtenir un second ensemble optimisé de paramètres et comprenant les étapes de :

- définition d'une efficacité cible donnée en tant que distribution d'entrée par rapport à la longueur d'onde de la lumière incidente (4),
- calcul de l'efficacité par rapport à la longueur d'onde de la lumière incidente (4) sur la base des premier et second ensembles de paramètres,
- réduction au minimum de la différence entre l'efficacité cible et l'efficacité calculée par modification de chaque paramètre du second ensemble de paramètres,

ladite étape d'optimisation étant effectuée afin d'obtenir une efficacité de transmission Ce de la lumière incidente (4) traversant le réseau (3) dans ledit guide d'ondes multimode (1) pour le premier ou le second ordre de diffraction dépassant 35 % pour une lumière non polarisée ou dépassant 50 % pour une lumière polarisée, à une longueur d'onde donnée de la lumière incidente (4),

ledit réseau (3) présentant une longueur D de réseau mesurée le long de ladite direction perpendiculaire à la longueur de motif, ladite longueur D de réseau étant liée à l'épaisseur WT du guide d'ondes multimode et à l'angle β entre la normale moyenne de guide d'ondes multimode et le faisceau lumineux (14) à l'intérieur du guide d'ondes multimode, ladite longueur D étant définie par l'inégalité suivante :

$$D \leq 2 \cdot WT \cdot \tan \beta$$

ledit procédé comprenant une étape de fabrication du réseau (3) sur la surface du guide d'ondes multimode en fonction du premier ensemble de paramètres sélectionné et dudit second ensemble optimisé de paramètres, ledit réseau (3) étant recouvert d'une couche d'amélioration (2) dont l'indice de réfraction n2 appartient au premier ensemble de paramètres et dont l'épaisseur L appartient au second ensemble de paramètres, ladite couche d'amélioration (2) présentant une forme conforme à la forme desdits motifs et présentant une épaisseur L entre 10 nm et 500 nm, de préférence entre 10 nm et 200 nm et

l'étape d'optimisation comprenant l'optimisation de ladite épaisseur L de couche et n2-n1 étant supérieur ou égal à 0,3, de préférence supérieur ou égal à 0,5, de préférence supérieur ou égal à 0,8 et

n2-n3 étant supérieur ou égal à 0,3, de préférence supérieur ou égal à 0,5, de préférence supérieur ou égal à 0,8, où, lorsque la forme du motif est rectangulaire, l'étape d'optimisation comprend en outre l'optimisation du facteur de remplissage rectangulaire A/P défini comme la largeur d'un rectangle A par rapport à la période P de réseau.

2. Procédé selon la revendication 1, la couche d'amélioration (2) étant réalisée en un matériau sélectionné parmi : ZnS ou $TiO_2$ ou $HfO_2$ ou $Ta_2O_5$ ou $ZrO_2$ ou AlN ou $Al_2O_3$ ou ZnO ou toute combinaison de ces matériaux.

3. Procédé selon la revendication 1, l'étape d'optimisation étant conçue pour obtenir une efficacité de transmission de la lumière incidente (4) dans ledit guide d'ondes (1) pour le premier ou le second ordre de diffraction dépassant 50 %, de préférence dépassant 70 %, de préférence dépassant 90 % à une longueur d'onde donnée de la lumière incidente.

4. Système optique comprenant un système de couplage de lumière, pouvant être obtenu par un procédé selon l'une quelconque des revendications 1 à 3, destiné à coupler un faisceau lumineux incident (4) polarisé ou non polarisé dans un guide d'ondes multimode (1) et un composant d'entrée de lumière conçu pour fournir ledit faisceau lumineux à un réseau (3) du guide d'ondes multimodal (1), le faisceau lumineux (4) présentant une distribution de longueur d'onde donnée et le système optique étant immergé dans un milieu d'indice de réfraction n1, ledit système de couplage de lumière comprenant :

- le guide d'ondes multimode (1) présentant un indice de réfraction n3,
- le réseau fabriqué sur une surface du guide d'ondes multimode (1) afin de coupler le faisceau lumineux (4) dans le guide d'ondes multimode, le réseau définissant une surface d'entrée de lumière et comprenant une période P de réseau et une profondeur d de réseau,

ledit réseau (3) comprenant une répétition de motifs présentant une forme dont la surface locale normale Ns, en tout emplacement de ladite forme, fait un angle $\alpha$ par rapport à la normale moyenne N de la surface du guide d'ondes multimode, ledit angle $\alpha$ étant situé entre $\alpha$=-90° et $\alpha$=90°, la profondeur d de réseau étant définie entre le point le plus haut et le point le plus bas du motif et ladite forme étant sélectionnée parmi une forme rectangulaire, une forme sinusoïdale, une forme triangulaire ou en forme d'escalier, ledit réseau présentant une longueur D, mesurée sur ladite surface, en direction du faisceau diffracté, ladite longueur D étant liée à l'épaisseur WT du guide d'ondes multimode (1) et à l'angle $\beta$ entre la normale à la surface du guide d'ondes multimode et un faisceau lumineux (14) à l'intérieur dudit guide d'ondes multimode (1), ladite longueur D étant définie par l'inégalité suivante :

$$D \leq 2 \cdot WT \cdot \tan \beta$$

le système de couplage de lumière comprenant une couche d'amélioration (2) recouvrant le réseau (3) présentant un indice de réfraction n2 et étant réalisée en un matériau sélectionné parmi : ZnS ou $TiO_2$ ou $HfO_2$ ou $Ta_2O_5$ ou $ZrO_2$ ou AIN ou $Al_2O_3$ ou ZnO ou toute combinaison de ces matériaux, la couche d'amélioration (2) présentant une forme conforme à la forme desdits motifs et

- n2-n1 étant supérieur ou égal à 0,3, de préférence supérieur ou égal à 0,5, de préférence supérieur ou égal à 0,8 et
- n2-n3 étant supérieur ou égal à 0,3, de préférence supérieur ou égal à 0,5, de préférence supérieur ou égal à 0,8 et

l'épaisseur L de ladite couche d'amélioration (2) sur ledit réseau (3) étant située entre 10 nm et 500 nm, de préférence entre 10 nm et 200 nm, le système de couplage de lumière fournissant une efficacité de transmission Ce du faisceau lumineux incident (4) dans ledit guide d'ondes multimode (3), pour le premier ou le second ordre de diffraction, dépassant 35 % pour une lumière non polarisée à une longueur d'onde donnée du faisceau lumineux incident ou dépassant 50 %, de préférence dépassant 70 %, de préférence dépassant 90 % pour une lumière polarisée à une longueur d'onde donnée du faisceau lumineux incident (4), où, lorsque la forme du motif est rectangulaire, le facteur de remplissage A/P, défini comme la largeur d'un rectangle A par rapport à la période P de réseau, est situé entre 10 % et 90 %, de préférence entre 40 % et 60 %.

5. Système optique selon la revendication 4. le guide d'ondes multimode (1) étant réalisé en verre, ou en quartz ou en polymère ou en SolGel.

6. Système optique selon la revendication 4, le guide d'ondes multimode (1) étant réalisé en polycarbonate PC ou en poly(méthacrylate de méthyle) PMMA ou en poly(téréphtalate d'éthylène) PET.

7. Système optique selon l'une quelconque des revendications 4 à 6, ladite profondeur d de réseau entre le point le plus élevé et le point le plus bas du motif de réseau étant située entre 10 nm et 1000 nm, de préférence entre 20 nm et 400 nm.

8. Système optique selon l'une quelconque des revendications 4 à 7, le réseau étant fabriqué sur la surface supérieure de guide d'ondes et l'épaisseur WT de guide d'ondes étant supérieure ou égale à 1 micron, de préférence supérieure ou égale à 10 microns, de préférence supérieure ou égale à 0,5 mm.

9. Système optique selon l'une quelconque des revendications 4 à 8, l'épaisseur L de la couche d'amélioration (2) étant située entre 100 nm et 200 nm.

10. Système optique selon l'une quelconque des revendications 4 à 9, destiné à coupler le faisceau lumineux incident (4) présentant une longueur d'onde située entre 400 nm et 700 nm, la période P de réseau, séparant deux motifs adjacents, étant située entre 230 nm et 840 nm.

11. Système optique selon l'une quelconque des revendications 4 à 9, destiné à coupler le faisceau lumineux incident (4) présentant une longueur d'onde située entre 700 nm et 2500 nm, la période P de réseau, séparant deux motifs adjacents, étant située entre 580 nm et 3000 nm.

12. Système optique selon l'une quelconque des revendications 4 à 9, destiné à coupler le faisceau lumineux incident (4) présentant une longueur d'onde située entre 250 nm et 400 nm, la période P de réseau, séparant deux motifs adjacents, étant située entre 180 nm et 560 nm.

FIG. 1

FIG. 2

FIG. 3

FIG. 4

FIG. 5

FIG. 6

FIG. 7

FIG. 8

FIG 9

FIG 10

| | P= 380nm, d = 210nm , ZnS: L=210 nm | P= 380nm, d = 210nm , ZnS: L=210 nm |
|---|---|---|
| 1 | T1, θ = 0° <br> A1 | T-1, θ = 0° <br> A2 |
| 2 | T1, θ = 8° <br> B1 | T-1, θ = 8° <br> B2 |
| 3 | T1, θ = 16° <br> C1 | T-1, θ = 20° <br> C2 |

FIG 11

FIG 12

27

FIG 13

FIG 14

FIG 15

Light In

Light Out

FIG 16

FIG 17

FIG 18

FIG 19

FIG 20

FIG 21

FIG 22

FIG 23

FIG.24

FIG.25

FIG.26

FIG.27

FIG.28

**FIG 29**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100277803 A
- US 6219478 B

- WO 2005103771 A

**Non-patent literature cited in the description**

- **DESTOUCHES.** Efficient and tolerant resonant grating coupler for multimode optical interconnections. *Optics Express,* 2007, vol. 15 (25), 16870-16879
- **JANYCE FRANC.** High efficiency diffraction grating coupler for multimode optical interconnect. *Micro-Optics, VCSELs*
- Photonic Interconnects II: Fabrication, Packaging, and Integration. Proc. of SPIE. vol. 6185

- Replicated slanted gratings with a high refractive index material tor in and outcoupling of light. **TAPANI LEVOLA et al.** OPTICS EXPRESS. OSA PUBLISHING, 05 March 2007, vol. 15, 2067-2074
- **L.ZHU et al.** Novel High Efficiency Vertical to In-plane Optical Coupler. *Proc.of SPIE,* 2012, vol. 8270, 82700L-1
- **M. G. MOHARAM ; T. K.GAYLORD.** Diffraction analysis of dielectric surface-relief gratings. *Journal of optical society of America,* October 1982, vol. 72 (10), 1292-1385